# EUROPEAN PATENT APPLICATION

(11) **EP 4 456 527 A1**
(43) Date of publication of application: **30.10.2024**
(21) Application number: 22911300.6
(22) Date of filing: 21.12.2022
(51) Int. Cl.: H04N 7/18, E02F 9/00, E02F 9/26, H04M 11/00, H04Q 9/00

(54) **INFORMATION PROCESSING SYSTEM, PROGRAM, AND INFORMATION PROCESSING METHOD**

(30) Priority: 22.12.2021 JP 2021208531
(71) Applicant: Sumitomo Construction Machinery Co., Ltd., Tokyo 141-6025 (JP)
(72) Inventor: IZUMIKAWA, Takeya, Chiba-shi, Chiba 263-0001 (JP); UMEDA, Takashi, Chiba-shi, Chiba 263-0001 (JP)
(74) Representative: Louis Pöhlau Lohrentz
(86) International application number: PCT/JP2022/047198
(87) International publication number: WO 2023/120598

(57) **Abstract**

An information processing system includes a shovel including an imaging device; and an information processing device, wherein the shovel transmits data to the information processing device, the data including an image captured by the imaging device and at least one of a direction, a time, or a position in association with the image, and wherein the information processing device performs, in response to designation of at least one of the direction, the time, or the position, control for displaying the image in association with at least a designated one of the direction, the time, or the position.

## Description

### TECHNICAL FIELD

The present invention relates to an information processing system, a program, and an information processing method.

### BACKGROUND ART

Traditionally, work machines such as hydraulic shovels are likely to be equipped with drive recorders and other imaging devices (e.g., see Patent Document 1). For example, in a related art technique described in Patent Document 1, whether or not an accident has occurred is determined, and then the surrounding situation is recorded as videos.

### RELATED ART DOCUMENT

### PATENT DOCUMENT

Patent Document 1: Japanese Unexamined Patent Publication No. 2018-053537

### SUMMARY OF THE INVENTION

### PROBLEMS TO BE SOLVED BY THE INVENTION

When an imaging device is provided in a work machine such as a hydraulic shovel, there are various demands for image data captured by the imaging device in addition to recognition of a situation at the occurrence of an accident. However, there is a problem that effective utilization corresponding to the demand is not performed.

According to an aspect of the present invention, a technique is provided for facilitating identification of a situation at a work site by capturing an image of the work site by an imaging device provided in a work machine and performing display based on the captured image data.

### MEANS FOR SOLVING THE PROBLEMS

According to an aspect of the present invention, an information processing system includes
a shovel including an imaging device; and
an information processing device,
wherein the shovel transmits data to the information processing device, the data including an image captured by the imaging device and at least one of a direction, a time, or a position in association with the image, and
wherein the information processing device performs, in response to designation of at least one of the direction, the time, or the position, control for displaying the image in association with at least a designated one of the direction, the time, or the position.

### EFFECTS OF THE INVENTION

According to an aspect of the present invention, it is desirable to provide a technique that makes it easy for an operator or the like to grasp a surrounding situation of a shovel.

### BRIEF DESCRIPTION OF THE DRAWINGS

[FIG. 1] FIG. 1 is a schematic view illustrating an example of a configuration of a surrounding image management system according to an embodiment.
[FIG. 2] FIG. 2 is a diagram illustrating an example of a configuration of a shovel according to the embodiment.
[FIG. 3] FIG. 3 is a top view illustrating the shovel according to the embodiment.
[FIG. 4] FIG. 4 is a configuration diagram illustrating an example of the configuration of the surrounding image management system according to the embodiment.
[FIG. 5] FIG. 5 is a diagram illustrating transmission data including captured image data transmitted by a transmission processing unit according to the embodiment.
[FIG. 6] FIG. 6 is a diagram illustrating a position where the shovel according to the embodiment performs imaging.
[FIG. 7] FIG. 7 is a diagram illustrating a concept of generating overhead view image data by combining captured image data by a combining unit according to the embodiment.
[FIG. 8] FIG. 8 is a diagram illustrating an example of overhead view image data generated by the combining unit according to the embodiment.
[FIG. 9] FIG. 9 is a diagram illustrating a list screen of work sites displayed by an image display processing unit according to the embodiment.
[FIG. 10] FIG. 10 is a diagram illustrating a list screen of work sites displayed by the image display processing unit according to the embodiment.
[FIG. 11] FIG. 11 is a diagram illustrating a display screen displayed by the image display processing unit according to the embodiment.
[FIG. 12] FIG. 12 is a diagram illustrating a display screen displayed by the image display processing unit according to the embodiment.
[FIG. 13] FIG. 13 is a sequence diagram illustrating a processing procedure until combined image data is stored in the peripheral image management system according to the embodiment.
[FIG. 14] FIG. 14 is a flowchart illustrating a processing procedure in a case of displaying display image data representing a work site in the communication terminal according to the embodiment.
[FIG. 15] FIG. 15 is a flowchart illustrating a processing procedure until display image data is transmitted in a management device according to the embodiment.

### EMBODIMENT OF THE INVENTION

Hereinafter, embodiments of the present invention will be described with reference to the drawings. The embodiments described below are not intended to limit the invention but are merely examples, and all features and combinations thereof described in the embodiments are not necessarily essential to the invention. In the drawings, the same or corresponding components are denoted by the same or corresponding reference numerals, and the description thereof may be omitted.

Hereinafter, the embodiments will be described with reference to the drawings.

### [Overview of Peripheral Image Management System]

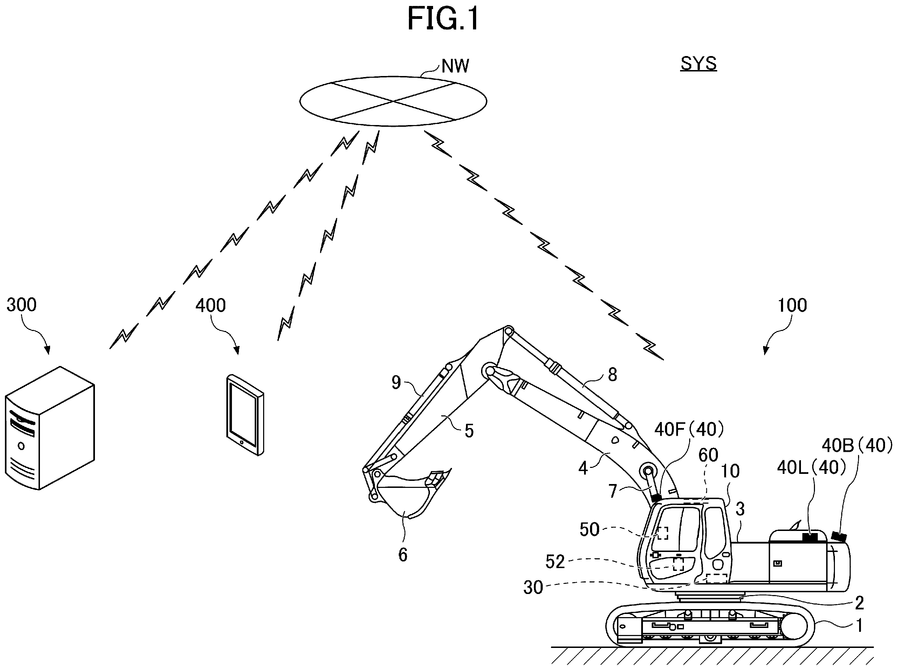

First, an overview of a surrounding image management system SYS (an example of an information processing system) will be described with reference to FIG. 1.

FIG. 1 is a schematic view illustrating an example of a configuration of a surrounding image management system SYS according to the present embodiment.

The surrounding image management system SYS according to the present embodiment is a system that manages videos of a work site (an example of a predetermined range) where a shovel 100 performs work, and includes the shovel 100, a management device 300, and a communication terminal 400. The surrounding image management system SYS manages image data captured by an imaging device 40 provided in the shovel 100. The number of shovels 100 included in the surrounding image management system SYS may be one or more. Similarly, the surrounding image management system SYS may include one or more communication terminals 400. The surrounding image management system SYS according to the present embodiment manages videos of the work site, thereby facilitating grasping of a situation at the work site where the shovel 100 performs work.

In the present embodiment, the shovel 100 transmits captured image data obtained by imaging to the management device 300. The management device 300 manages the received captured image data as a surrounding video of the work site where the shovel 100 is working. The communication terminal 400 can identify the situation around the work site by receiving image data or the like indicating the surroundings of the work site from the management device 300.

### <Overview of Shovel>

The shovel 100 includes a lower traveling body 1, an upper turning body 3 mounted on the lower traveling body 1 via a turning mechanism 2 so as to be turnable (turning freely), a boom 4, an arm 5, and a bucket 6 as attachments, a cabin 10, and the like.

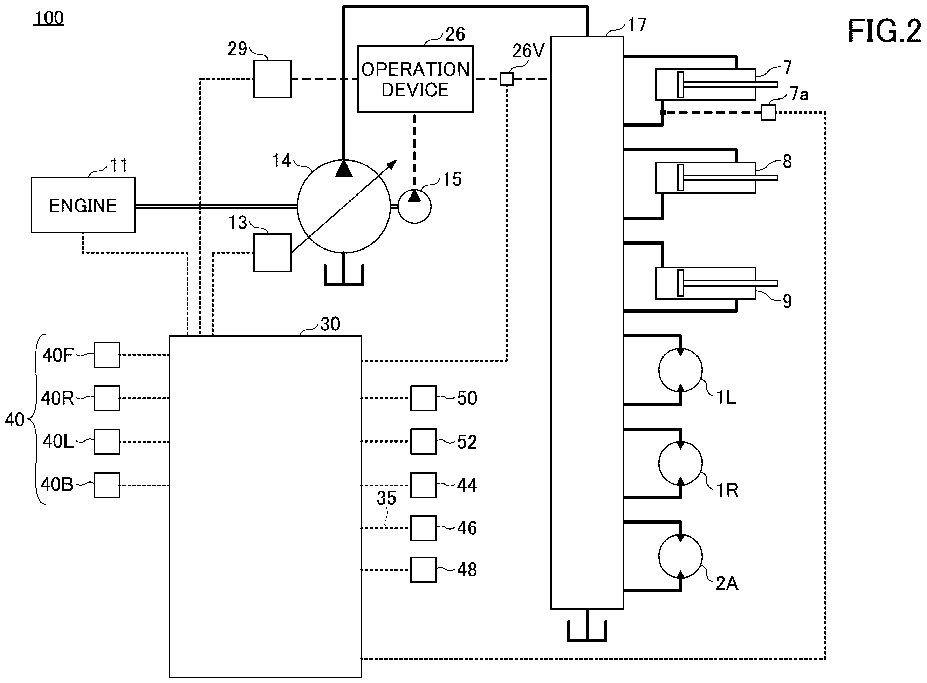

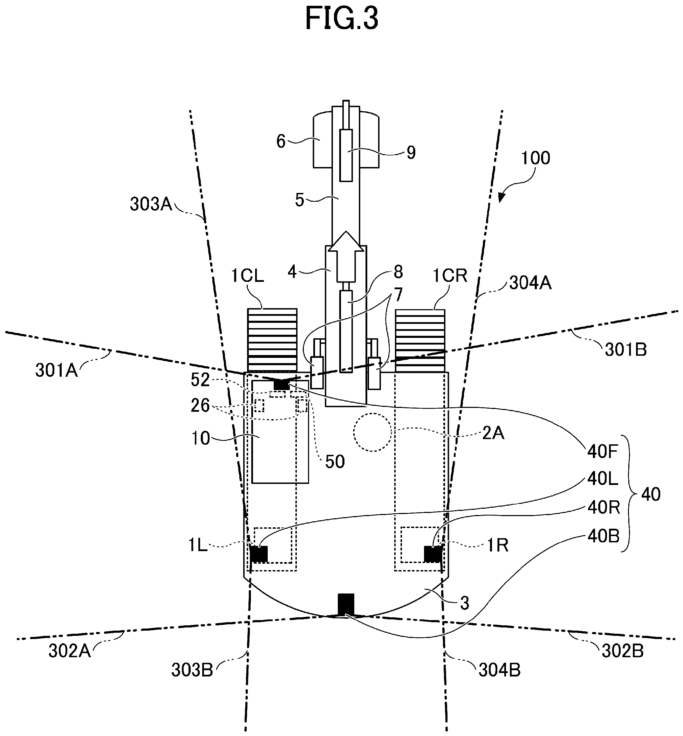

The lower traveling body 1 includes, for example, a pair of left and right crawlers 1CL and 1CR (see FIG. 3), and the respective crawlers are hydraulically driven by traveling hydraulic motors 1L and 1R (see FIG. 2), thereby causing the shovel 100 to travel.

The upper turning body 3 turns with respect to the lower traveling body 1 by being driven by a turning hydraulic motor 2A (see FIG. 2).

The boom 4 is pivotally attached to the center of the front portion of the upper turning body 3 so as to be capable of being elevated and lowered, the arm 5 is pivotally attached to the tip of the boom 4 so as to be capable of being vertically rotated, and the bucket 6 is pivotally attached to the tip of the arm 5 so as to be capable of being vertically rotated. The boom 4, the arm 5, and the bucket 6 are hydraulically driven by a boom cylinder 7, an arm cylinder 8, and a bucket cylinder 9, respectively, as hydraulic actuators.

The bucket 6 is an example of an end attachment, and an end attachment of a type different from the bucket 6 (e.g., an end attachment for a different application from the bucket 6, such as a crusher or a lifting magnet, or an end attachment with different specifications other than the application of the bucket 6, such as a large bucket) may be attached to the shovel 100. That is, the shovel 100 may be configured such that the type of the end attachment can be appropriately replaced in accordance with the work content or the like.

The cabin 10 is a control room which an operator gets into, and an operation device 26 (see FIG. 2) and the like are provided inside the cabin 10. The cabin 10 is mounted on, for example, the left side of the front portion of the upper turning body 3.

The shovel 100 includes a communication device 60 for communicating with a predetermined communication network NW. The communication device 60 of the shovel 100 communicates with the management device 300 through a predetermined communication network NW.

The communication network NW may include, for example, a mobile communication network having a base station as a terminal. The communication network NW may include a satellite communication network using a communication satellite in the sky. The communication network NW may include the Internet and the like. The communication network NW may include a short-range communication network conforming to a protocol such as Wi-Fi (registered trademark) or Bluetooth (registered trademark).

The shovel 100 operates the actuator in response to an operation of an operator in the cabin 10, and drives driven elements such as the lower traveling body 1, the upper turning body 3, the boom 4, the arm 5, and the bucket 6.

The shovel 100 may automatically operate the hydraulic actuator regardless of the content of the operation of the operator. Thus, the shovel 100 may implement a function of automatically operating at least some of the driven elements such as the lower traveling body 1, the upper turning body 3, the boom 4, the arm 5, and the bucket 6.

The shovel 100 includes a display device 50. The display device 50 of the shovel 100 displays captured image data captured by the imaging device 40. Thus, the operator in the cabin 10 can grasp a situation around the shovel 100.

The shovel 100 includes four imaging devices 40. The imaging devices 40 include, for example, a monocular camera, a stereo camera, a depth camera, and the like. Further, the imaging devices 40 may each be any given device capable of imaging the surroundings of the shovel 100, and for example, a drive recorder may be used. Furthermore, the captured image data captured by the imaging device 40 may be a still image or a moving image.

The four imaging devices 40 are provided so as to image the surroundings of the shovel 100. The imaging device 40 according to the present embodiment is provided with a wide-angle lens. For example, the imaging device 40 of the shovel 100 includes an imaging device 40B that images the front of the upper turning body 3, an imaging device 40B that images a rear portion of the upper turning body 3, an imaging device 40L that images the left side of the upper turning body 3, and an imaging device 40R (not illustrated in FIG. 1) that images the right side of the upper turning body 3.

Then, the captured image data captured by the imaging device 40 is transmitted to a controller 30. Then, the controller 30 transmits the captured image data and various kinds of information indicating the situation of the shovel 100 to the management device 300 in association with each other via the communication device 60.

### <Overview of Management device>

The management device 300 (an example of an information processing device) is disposed at a position geographically separated from the shovel 100, a user who carries the communication terminal 400, and the like. The management device 300 is, for example, a server device that is installed in a management center or the like provided outside the work site where the shovel 100 performs work, and is mainly configured by one or a plurality of server computers or the like. In this case, the server device may be an in-house server of a company that operates the surrounding image management system SYS or a related company that is relating to the aforementioned company, or may be a rental server. The server device may be a so-called cloud server. The management device 300 may be a server device (so-called edge server) disposed in a management office or the like in the work site of the shovel 100, or may be a stationary or portable general-purpose computer terminal.

The management device 300 can communicate with each of the shovel 100 or the communication terminal 400 through the communication network NW. Accordingly, the management device 300 can manage the image data and the like received from the shovel 100. Similarly, the management device 300 can transmit managed image data and the like to the communication terminal 400.

### <Overview of Communication Terminal>

The communication terminal 400 (an example of an information processing device) is a user terminal used by a user, and receives provision of information (including image data) indicating a situation of a work site (an example of a predetermined range) where the shovel 100 is working. The user may include, for example, a supervisor of the work site, a manager, an operator of the shovel 100, a manager of the shovel 100, a service person of the shovel 100, a developer of the shovel 100, and the like.

The communication terminal 400 is, for example, a general-purpose portable terminal such as a laptop computer terminal, a tablet terminal, or a smartphone possessed by a user. The communication terminal 400 may be a stationary general-purpose terminal such as a desktop computer.

The communication terminal 400 can communicate with the management device 300 via the communication network NW. Accordingly, the communication terminal 400 receives the image data indicating the situation at the work site transmitted from the management device 300, and displays the situation at the work site on the display device mounted on the communication terminal 400.

The communication terminal 400 may be configured to be able to communicate with the shovel 100 via the communication network NW.

### [Configuration of Shovel]

Next, a specific configuration of the shovel 100 will be described with reference to FIG. 2 in addition to FIG. 1. FIG. 2 is a diagram illustrating an example of the configuration of the shovel 100 according to the present embodiment.

In the drawing, the mechanical power line is indicated by a double line, the hydraulic fluid line is indicated by a solid line, the pilot line is indicated by a broken line, and the electric drive/control line is indicated by a dotted line.

A hydraulic drive system that hydraulically drives the hydraulic actuator in the shovel 100 according to the present embodiment includes an engine 11, a regulator 13, a main pump 14, and a control valve 17. The hydraulic drive system of the shovel 100 according to the present embodiment includes hydraulic actuators such as traveling hydraulic motors 1L and 1R, the turning hydraulic motor 2A, the boom cylinder 7, the arm cylinder 8, and the bucket cylinder 9. The hydraulic actuators such as the traveling hydraulic motors 1L and 1R, the turning hydraulic motor 2A, the boom cylinder 7, the arm cylinder 8, and the bucket cylinder 9 hydraulically drive the lower traveling body 1, the upper turning body 3, the boom 4, the arm 5, and the bucket 6, respectively.

The engine 11 is a main power source in the hydraulic drive system, and is mounted, for example, on a rear portion of the upper turning body 3. The engine 11 is, for example, a diesel engine using light oil as fuel. Specifically, the engine 11 rotates at a constant target rotation speed set in advance under direct or indirect control by the controller 30 described later, and drives the main pump 14 and a pilot pump 15.

The regulator 13 adjusts the discharge amount of the main pump 14 under the control of the controller 30. For example, the regulator 13 adjusts the angle of the swash plate of the main pump 14 (hereinafter, referred to as "tilt angle") in response to a control command from the controller 30.

The main pump 14 is mounted, for example, on the rear portion of the upper turning body 3 similarly to the engine 11, and supplies the hydraulic fluid to the control valve 17 through the hydraulic fluid line. The main pump 14 is driven by the engine 11 as described above. The main pump 14 is, for example, a variable displacement hydraulic pump, and as described above, the stroke length of the piston is adjusted by the tilting angle of the swash plate being adjusted by the regulator 13 under the control of the controller 30, and the discharge flow rate (discharge pressure) is controlled.

The control valve 17 is, for example, a hydraulic control device that is mounted in the central portion of the upper turning body 3 and controls the hydraulic drive system in response to an operation performed on the operation device 26 by the operator. As described above, the control valve 17 is connected to the main pump 14 via the hydraulic fluid line, and selectively supplies the hydraulic fluid supplied from the main pump 14 to the hydraulic actuators (the traveling hydraulic motors 1L and 1R, the turning hydraulic motor 2A, the boom cylinder 7, the arm cylinder 8, and the bucket cylinder 9) in accordance with the operation state of the operation device 26. Specifically, the control valve 17 includes a plurality of control valves that control the flow rate and the flow direction of the hydraulic fluid supplied from the main pump 14 to each of the hydraulic actuators.

An operation system of various operation elements (hydraulic actuators) in the shovel 100 according to the present embodiment includes the pilot pump 15 and the operation device 26.

The pilot pump 15 is mounted, for example, on a rear portion of the upper turning body 3, and supplies a pilot pressure to the operation device 26 via a pilot line. The pilot pump 15 is, for example, a fixed displacement hydraulic pump, and is driven by the engine 11 as described above.

The operation device 26 is provided near the operator's seat of the cabin 10, and is an operation input means for an operator to operate various operation elements (the lower traveling body 1, the upper turning body 3, the boom 4, the arm 5, the bucket 6, etc.). In other words, the operation device 26 is an operation input means for the operator to operate the hydraulic actuators (i.e., the traveling hydraulic motors 1L and 1R, the turning hydraulic motor 2A, the boom cylinder 7, the arm cylinder 8, the bucket cylinder 9, etc.) that drive the respective operating elements. The operation device 26 is, for example, a hydraulic pilot type, and is connected to the control valve 17 through a pilot line on the secondary side. Thus, the pilot pressure corresponding to the operation state of the lower traveling body 1, the upper turning body 3, the boom 4, the arm 5, the bucket 6, and the like in the operation device 26 is input to the control valve 17. Therefore, the control valve 17 can selectively drive the respective hydraulic actuators in accordance with the operation state of the operation device 26. The operation device 26 includes, for example, a lever device that operates each of the attachments, that is, the boom 4 (boom cylinder 7), the arm 5 (arm cylinder 8), the bucket 6 (bucket cylinder 9), and the upper turning body. The operation device 26 includes, for example, a pedal device or a lever device for operating each of the left and right lower traveling bodies 1 (traveling hydraulic motors 1L and 1R).

The operation device 26 may be an electric type. In this case, the operation device 26 outputs an electric signal (hereinafter, referred to as an "operation signal") indicating the operation content (e.g., an operation amount and an operation direction), and the operation signal is input to, for example, the controller 30. The controller 30 outputs an operation command corresponding to the operation signal to a hydraulic control valve (e.g., a hydraulic control valve 31 described later) installed in a pilot line between the pilot pump 15 and the control valve 17. Thus, the pilot pressure corresponding to the operation content of the operation device 26 acts on the control valve 17 from the hydraulic control valve. Thus, the controller 30 can cause the control valve 17 to perform an operation corresponding to the operation content of the operation device 26. In addition, in a case where the various control valves of the control valve 17 are electrically driven (e.g., electromagnetic solenoid type), the operation signal output from the operation device 26 may be directly input to the various control valves of the control valve 17. In this way, some or all of the various hydraulic actuators may be replaced with the electric actuators, and the shovel 100 may be a hybrid shovel or an electric shovel.

The control system of the shovel 100 according to the present embodiment includes the controller 30, a boom bottom pressure sensor 7a, a pressure reduction valve 26V, an operation pressure sensor 29, a display device 50, an input device 52, an audio output device 44, a GPS unit 46, a timer device 48, and the four imaging devices 40.

The controller 30 is provided in the cabin 10, for example, and performs drive control of the shovel 100. The functions of the controller 30 may be implemented by any hardware, any software, or a combination thereof. For example, the controller 30 is mainly configured by a microcomputer including circuitry such as a central processing unit (CPU), a read only memory (ROM), a random access memory (RAM), a non-volatile auxiliary storage device, various input/output interfaces, and the like. The controller 30 implements various functions by executing various programs stored in the ROM or the nonvolatile auxiliary storage device on the CPU, for example.

The boom bottom pressure sensor 7a is attached to the boom cylinder 7 and detects the pressures in the bottom-side oil chambers (hereinafter referred to as "boom bottom pressures"). A detection signal corresponding to the boom bottom pressure detected by the boom bottom pressure sensor 7a is incorporated into the controller 30.

The pressure reduction valve 26V is provided in a pilot line on the secondary side of the operation device 26, and is configured to be capable of reducing the pilot pressure corresponding to the operation state (e.g., the operation amount or the operation direction) of the operation device 26 under the control of the controller 30. For example, the pressure reduction valve 26V is provided for all of the individual operation units such as the lever device and the pedal device corresponding to each of the plurality of operation elements (i.e., the plurality of hydraulic actuators that drive these operation elements) included in the operation device 26. For example, when a control current as a control command is not input from the controller 30, the pressure reduction valve 26V does not reduce the pilot pressure output from the operation device 26 and causes the pilot pressure to act on the control valve 17 as it is. On the other hand, when the control current is input from the controller 30, the pressure reduction valve 26V reduces the pilot pressure output from the operation device 26 in accordance with the magnitude of the control current, and applies the reduced pilot pressure to the control valve 17. Thus, the controller 30 can restrict the operation of the hydraulic actuator corresponding to the operation content in the operation device 26 by the operator or the like, that is, the operation of the operation element driven by the hydraulic actuator.

The operation pressure sensor 29 detects a pilot pressure on the secondary side of the operation device 26, that is, a pilot pressure corresponding to the operation state of each operation element (hydraulic actuator) in the operation device 26. A detection signal of the pilot pressure corresponding to the operation content (operation state) of the lower traveling body 1, the upper turning body 3, the boom 4, the arm 5, the bucket 6, and the like in the operation device 26 by the operation pressure sensor 29 is incorporated into the controller 30.

The display device 50 is provided at a position in the cabin 10 that is easily visible to the seated operator, and displays various information images under the control of the controller 30. The display device 50 may be connected to the controller 30 via an in-vehicle communication network such as a controller area network (CAN) or may be connected to the controller 30 via a dedicated line in a one-to-one manner.

The input device 52 is provided within reach of an operator seated in the cabin 10, receives various operation inputs from the operator, and outputs a signal corresponding to the operation input to the controller 30. The input device 52 may include, for example, a touch panel mounted on a display of a display device that displays various information images, a knob switch provided at the tip of a lever portion of a lever device included in the operation device 26, and a button switch, a lever, a toggle, and a dial installed around the display device 50.

The audio output device 44 is provided in the cabin 10 and outputs various sounds under the control of the controller 30. The audio output device 44 is, for example, a speaker, a buzzer, or the like.

The imaging device 40 is attached to an upper portion of the upper turning body 3, captures an image of the surroundings of the shovel 100, and outputs the captured image. The imaging devices 40 include imaging devices 40F, 40B, 40L, and 40R.

As described above, the imaging devices 40F, 40B, 40L, and 40R are attached to the upper portion of the front end (e.g., the upper portion of the front end of the cabin 10), the upper portion of the rear end, the upper portion of the left end, and the upper portion of the right end of the upper turning body 3, and image the states of the front, rear, left side, and right side of the upper turning body 3. For example, each of the imaging devices 40F, 40B, 40L, and 40R is a monocular wide-angle camera having a very wide angle of view. Specifically, the imaging devices 40F, 40B, 40L, and 40R are attached to the upper portion of the upper turning body 3 such that the optical axes thereof are directed obliquely downward, and the imaging devices 40F, 40B, 40L, and 40R capture images within an imaging range in the vertical direction including a range from the ground near the shovel 100 to a position far from the shovel 100. The imaging devices 40F, 40B, 40L, and 40R each output the captured image at predetermined intervals (e.g., 1/30 seconds) during the activation of the shovel 100, and the output captured image is output to the controller 30.

A GPS (Global Positioning System) unit 46 measures the current position of the shovel 100 by receiving radio waves from GPS satellites. The GPS unit 46 transmits the measured current position information to the controller 30.

The timer device 48 is, for example, a real time clock (RTC), and acquires date and time information including the current date, day of the week, and time. The timer device 48 outputs the acquired date and time information to the controller 30.

FIG. 3 is a top view illustrating the shovel 100 according to the embodiment. In the drawing illustrated in FIG. 3, the installation position of the imaging device 40 and the range in which imaging is possible are illustrated.

More specifically, the imaging device 40F captures images at least within the area indicated by boundary lines 301A and 301B. The imaging device 40B captures images at least within the area indicated by boundary lines 302A and 302B. The imaging device 40L captures images at least within the area indicated by boundary lines 303A and 303B. The imaging device 40R captures images at least within the area indicated by the boundary lines 304A and 304B. That is, in the present embodiment, the four imaging devices 40 can image the surroundings of the shovel 100 without generating any blind spots.

### [Configuration of Surrounding Image Management System]

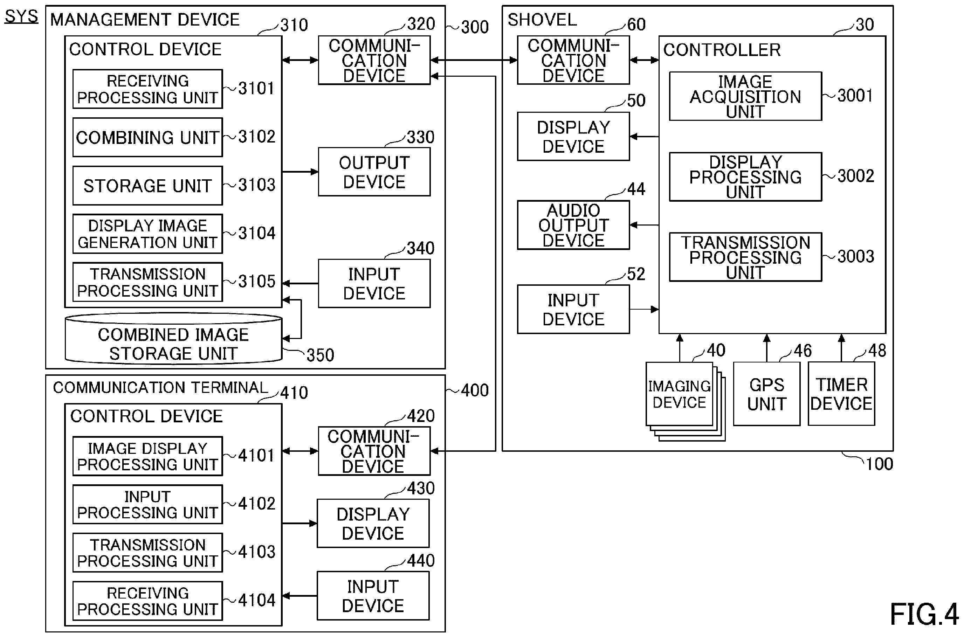

Next, a specific configuration of the surrounding image management system SYS according to the present embodiment will be described with reference to FIG. 4.

FIG. 4 is a configuration diagram illustrating an example of the configuration of the surrounding image management system SYS according to the present embodiment.

In the surrounding image management system SYS according to the present embodiment, the shovel 100 performs work at a work site. At this time, the shovel 100 transmits captured image data to the management device 300 captured by the imaging device 40 provided in the shovel 100, and the position, the direction, and the time at which the captured image data is captured in association with each other. The management device 300 manages the transmitted captured image data in association with the position, direction, time, and the like at which the image has been captured. The communication terminal 400 performs communication with the management device 300 to perform display relating to the captured image data.

Thus, a user of the communication terminal 400 can recognize a situation at the work site where the shovel 100 is working. Next, control systems of the shovel 100, the management device 300, and the communication terminal 400 illustrated in FIG. 4 will be described in order.

### <Control System of Shovel>

Next, a control system of the shovel 100 illustrated in FIG. 4 will be described. The control system of the shovel 100 according to the present embodiment includes a controller 30, four imaging devices 40, a display device 50, an audio output device 44, an input device 52, a communication device 60, a GPS unit 46, and a timer device 48.

The communication device 60 is any given device that communicates with the outside such as the management device 300 through the communication network NW. The communication device 60 is a mobile communication module corresponding to a predetermined mobile communication standard such as Long Term Evolution (LTE), 4th Generation (4G), or 5th Generation (5G).

The controller 30 performs drive control of the shovel 100. The function of the controller 30 may be implemented by any given hardware, a combination of any given hardware and software, or the like. The controller 30 is mainly configured by a microcomputer including, for example, circuitry including a central processing unit (CPU), a memory device (also referred to as a "main storage device") such as random access memory (RAM), a non-volatile auxiliary storage device such as read only memory (ROM), and an interface device for input and output with the outside. The controller 30 implements various functions by, for example, executing one or more programs installed in the auxiliary storage device on the CPU. The same applies to a control device 310 of the management device 300 and a control device 410 of the communication terminal 400, which will be described below.

For example, the controller 30 identifies an object existing in a range (hereinafter, referred to as a "monitoring area") relatively close to the shovel 100 based on the captured image data of the surroundings of the shovel 100 captured by the imaging device 40. An object to be grasped includes not only a person such as a worker or a supervisor of a work site but also any object such as a moving object (moving body) such as a work vehicle or a stationary object such as a stationary material or a topographical obstacle such as a rock.

The controller 30 includes, for example, an image acquisition unit 3001, a display processing unit 3002, and a transmission processing unit 3003 as functional units that are implemented by executing one or more programs installed in the auxiliary storage device on the CPU.

Note that some of the functions of the controller 30 may be implemented by another controller. That is, the functions of the controller 30 may be implemented by a plurality of controllers in a distributed manner.

Next, functional units implemented in the controller 30 will be described. The functions of the image acquisition unit 3001, the display processing unit 3002, the transmission processing unit 3003, and the like may be enabled by a predetermined application program (hereinafter, referred to as a "surrounding imaging application") installed in the controller 30 being activated in response to a predetermined operation performed on the input device 52 by the operator.

The surrounding imaging application is an application used to display captured image data captured by the imaging device 40 provided in the shovel 100 or to transmit the captured image data to the management device 300.

The image acquisition unit 3001 acquires captured image data of the surroundings of the shovel 100 captured by the four imaging devices 40. The image acquisition unit 3001 according to the present embodiment acquires captured image data of the surroundings of the shovel 100 captured by each of the four imaging devices 40 every time the shovel 100 moves by a predetermined distance or at predetermined time intervals.

The display processing unit 3002 performs processing to display the captured image data acquired by the image acquisition unit 3001 on the display device 50.

The transmission processing unit 3003 transmits information (hereinafter, referred to as transmission data) including captured image data of the surroundings of the shovel 100 captured by each of the four imaging devices 40 and various kinds of information in association with the captured image data to the management device 300 using the communication device 60. The various information will be described later.

The transmission processing unit 3003 may switch whether to transmit the data according to the acquired information. For example, when the controller 30 determines that the inclination of the shovel 100 is equal to or greater than a predetermined angle based on an acceleration sensor or the like provided in the shovel 100, the transmission processing unit 3003 may suppress the transmission of the transmission data. Thus, since the display by the captured image data when the shovel 100 runs on the earth and sand or the like can be suppressed, the viewability can be improved.

### <Description of Data Transmitted by Shovel 100>

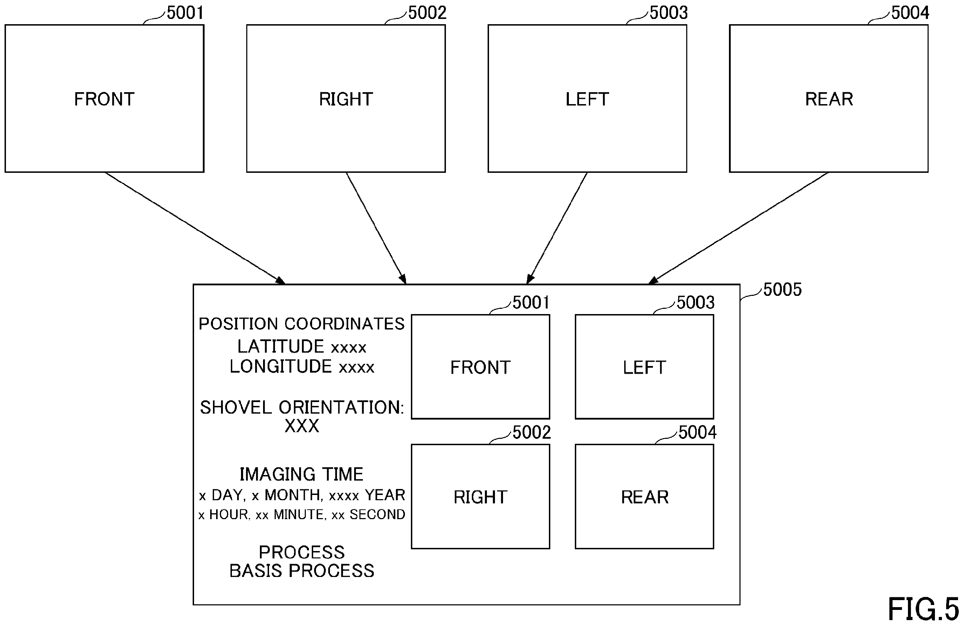

FIG. 5 is a diagram illustrating transmission data 5005 including captured image data transmitted by the transmission processing unit 3003. As illustrated in FIG. 5, the transmission processing unit 3003 combines the captured image data 5001 captured by the imaging device 40F, the captured image data 5002 captured by the imaging device 40R, the captured image data 5003 captured by the imaging device 40L, and the captured image data 5004 captured by the imaging device 40B into one.

The various kinds of information of the transmission data 5005 include current position coordinates (latitude and longitude) measured by the GPS unit 46, the orientation of the shovel 100 (the direction in which the shovel 100 is oriented), and the date and time information (including the time) indicating the imaging time acquired by the timer device 48. Further, the various kinds of information may include information indicating the movement amount of the shovel 100, the turning amount of the shovel 100, and the like after the transmission data 5005 is transmitted last time. In the present embodiment, an example in which the orientation of the shovel 100 is included in various kinds of information of the transmission data 5005 will be described. However, the information included in the transmission data 5005 is not limited to the orientation of the shovel 100, and for example, the orientation of the imaging device 40 that has captured each of the captured image data 5001 to 5004 may be included.

The various information of the transmission data 5005 may include information input by the operator from the input device 340. The information input by the operator may include, for example, information indicating a work process relating to work currently performed by the shovel 100.

Further, when any one or more of the four pieces of captured image data are displayed on the display device 50 of the shovel 100, the various kinds of information of the transmission data 5005 may include information indicating the captured image data displayed on the display device 50. Thus, a screen displayed on the display device 50 of the shovel 100 can be grasped by referring to the various kinds of information. For example, when displaying a screen representing the surroundings of the shovel 100 at a predetermined time, the screen that has been displayed on the display device 50 at the predetermined time can be displayed. This enables the screen displayed on the display device 50 to be compared with the surrounding situation of the shovel 100 at the time the screen has been displayed. For example, when an abnormality occurs during the work of the shovel 100, the surrounding situation at the time of the occurrence of the abnormality and the screen to which the operator in the shovel 100 refers at the time of the occurrence of the abnormality can be grasped. Therefore, it may be easy to investigate the cause of the abnormality, to determine whether the operator has made an error in the determination, and the like.

Further, in a case where an acceleration sensor or the like is provided in the shovel 100, the various kinds of information of the transmission data 5005 may include information indicating the inclination of the shovel 100.

Further, in a case where the shovel 100 grasps a work process due to such as performing civil engineering work utilizing information and communication technology (ICT), for example, the various kinds of information of the transmission data 5005 may include information indicating a process currently performed by the shovel 100. The various kinds of information according to the present embodiment include at least the current position coordinates, the orientation of the shovel 100, and the date and time information indicating the imaging time acquired by the timer device 48. However, in the present embodiment, the various kinds of information are not limited to the example of the present embodiment including all of the position coordinates, the orientation of the shovel 100, and the date and time information, and may include at least one of the position coordinates, the orientation of the shovel 100, or the date and time information (including the time). For example, when date and time information is included in the various kinds of data, the management device 300 may specify the position coordinates of the shovel 100 based on the date and time information. More specifically, when the management device 300 recognizes trajectory of the movement of the shovel 100 according to the time, the management device 300 can specify the position coordinates at which the captured image data is captured based on the date and time information even when the position coordinates are not included in the various kinds of data. When the shovel 100 passes through the predetermined position coordinates a plurality of times, the transmission processing unit 3003 transmits a plurality of pieces of captured image data having the position coordinates and different date and time information. Thus, the management device 300 can manage a plurality of captured image data corresponding to the same position coordinates. In the present embodiment, the four imaging devices 40 fixed to the shovel 100 simultaneously perform imaging. Therefore, the captured image data in four directions is transmitted for each of the position coordinates and the date and time information of the image capturing. In the present embodiment, an example of transmitting captured image data in four directions will be described, but the present invention is not limited to a method of transmitting captured image data in all four directions. For example, when the shovel 100 is present on a passage, the shovel 100 may acquire and transmit only captured image data in a direction in which the shovel 100 can move on the passage.

The transmission processing unit 3003 according to the present embodiment transmits the transmission data 5005 including the various kinds of information described above to the management device 300. Accordingly, the management device 300 can manage the situation at the work site together with the information indicating the current situation of the shovel 100. Next, a position at which the shovel 100 performs imaging will be described.

### <Specific Example of Position Where Shovel 100 Performs Imaging>

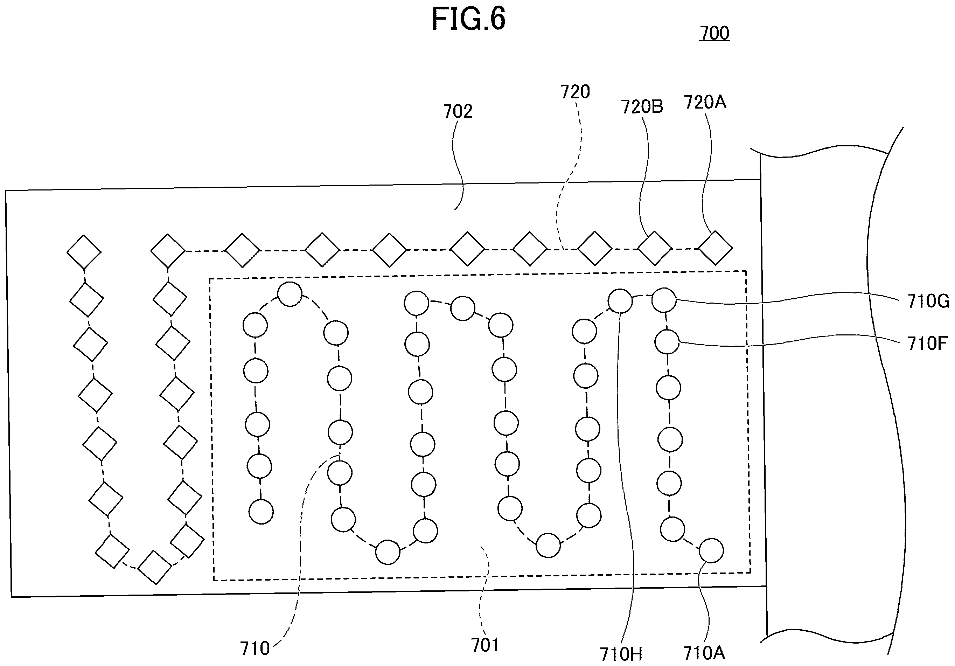

FIG. 6 is a diagram illustrating a position where the shovel 100 according to the present embodiment performs imaging. In the example illustrated in FIG. 6, two shovels (first shovel 100A and second shovel 100B) are working at a work site 700. In the example illustrated in FIG. 6, the work area is specified for each shovel. Specifically, the first shovel 100A performs work in a work area 701 (area surrounded by a broken line), and the second shovel 100B performs work in a work area 702 (area outside the area surrounded by the broken line).

In the example illustrated in FIG. 6, the first shovel 100A and the second shovel 100B perform imaging using the imaging devices 40 every time the first and second shovels move by predetermined distances. The distance intervals for imaging are implemented according to different embodiments. The timing at which the imaging devices 40 perform imaging is not limited to the timing of every time the shovels move by a predetermined distance, and the imaging devices 40 may perform imaging every time a predetermined time has elapsed. In addition, in order to perform imaging of an entire area of the work site 700, each shovel 100 may travel in a corresponding one of assigned areas regardless of work, or may perform imaging while performing work in a work area to which the corresponding shovel 100 is assigned. By combining the imaging results obtained from the plurality of shovels 100 working in the work site 700, the captured image data captured at each of the positions included in the entire work site can be obtained.

The first shovel 100A moves along a movement trajectory 710 with first position coordinates 710A as a starting point. The imaging device 40 of the first shovel 100A performs imaging at the position indicated by the circle mark "0" every time the first shovel 100A moves by a predetermined distance.

Similarly, the second shovel 100B moves along the movement trajectory 720 with the first position coordinates 720A as a starting point. The imaging device 40 of the second shovel 100B performs imaging for each of the position marks indicated by the square marks "◇" every time the second shovel 100B moves by a predetermined distance.

The transmission processing unit 3003 of the first shovel 100A and the second shovel 100B transmits the transmission data 5005 corresponding to the position to the management device 300 for each position at which the imaging is performed.

Thus, the management device 300 can receive the captured image of the entire area of the work site 700 even when the work area is shared by the first shovel 100A and the second shovel 100B.

Therefore, the communication terminal 400 described later can grasp the situation at the work site based on the captured image data regardless of which of the first shovel 100A and the second shovel 100B is captured. The correspondence between the position where the image is captured and the screen to be displayed will be described later.

Even when the first shovel 100A and the second shovel 100B pass again through the movement paths through which the first and second shovels have passed previously, imaging is performed every time the first and second shovels move by predetermined distances. Thus, the management device 300 can receive a plurality of captured image data captured at substantially the same position at different times. Therefore, the management device 300 can store a change in the work site over time at substantially the same position.

### <Control System of Management device>

Next, a control system of the management device 300 illustrated in FIG. 4 will be described. The management device 300 includes a control device 310, a communication device 320, an output device 330, and an input device 340.

The communication device 320 is any given device that communicates with external devices such as the shovel 100 and the communication terminal 400 through the communication network NW.

The output device 330 includes, for example, a display, and displays various information images under the control of the control device 310.

The input device 340 receives various operation inputs from an operator of the management device 300 and outputs a signal corresponding to the operation input to the control device 310. The input device 340 may include, for example, a touch panel, a keyboard, a mouse, and the like mounted on a display of the output device 330 that displays various information images.

The control device 310 controls various operations in the management device 300. The control device 310 includes, for example, a receiving processing unit 3101, a combining unit 3102, a storage unit 3103, a display image generation unit 3104, and a transmission processing unit 3105 as functional units implemented by executing one or more programs installed in a non-volatile auxiliary storage device on the CPU. The control device 310 includes a combined image storage unit 350 as a storage area defined in a nonvolatile internal memory such as an auxiliary storage device.

Note that the storage area corresponding to the combined image storage unit 350 may be provided in an external storage device communicably connected to the control device 310.

The receiving processing unit 3101 controls receiving of information from the communication terminal 400 or the shovel 100 using the communication device 320.

For example, the receiving processing unit 3101 controls receiving of the transmission data 5005, in which the captured image data and various kinds of information are associated with each other, from each of the first shovel 100A and the second shovel 100B.

The receiving processing unit 3101 according to the present embodiment receives the transmission data 5005 including the captured image data captured every time the shovel 100 moves by a predetermined distance. In addition, in a case where the shovel 100 reciprocates in the same place, the receiving processing unit 3101 may repeatedly receive the transmission data 5005 including the captured image data captured in the same place of the same work site. In such a case, captured image data captured at the same position at different times is stored. Thus, a change in the surroundings of the shovel 100 according to a change in time can be stored.

In the present embodiment, the transmission data 5005 (see FIG. 5) received by the receiving processing unit 3101 includes four pieces of captured image data obtained by capturing images in different directions by the shovel 100, and also includes various kinds of information.

The combining unit 3102 combines pieces of captured image data that differ in at least one of direction, time, or position, and that are included in the transmission data 5005 received by the receiving processing unit 3101. For example, the combining unit 3102 combines four pieces of captured image data captured at the same position and the same time but in different directions included in the transmission data 5005 received by the receiving processing unit 3101 to generate overhead view image data, which represents surroundings of the shovel 100 at the imaging time.

The combining unit 3102 may generate one piece of combined image data from a plurality of pieces of transmission data 5005. For example, the combining unit 3102 may combine a plurality of pieces of captured image data extracted from a plurality of pieces of transmission data 5005 captured at the same position and at different times, based on the position or orientation at which an image is captured.

For example, the captured image data captured at the time A displays an obstacle on the left side of the shovel 100, but displays no obstacle on the right side of the shovel 100, and the captured image data captured at the time B displays no obstacle on the left side of the shovel 100, but displays an obstacle on the right side of the shovel 100. In this case, the combining unit 3102 may combine pieces of the captured image data that do not display the obstacle, from among pieces of the captured image data at the time A and pieces of the captured image data at the time B to generate the overhead view image data. This enables the generation of overhead image data (an example of combined image data) with less display of surrounding objects based on the relevant position. That is, the combining unit 3102 can generate overhead view image data with improved viewability by combining a plurality of captured image data.

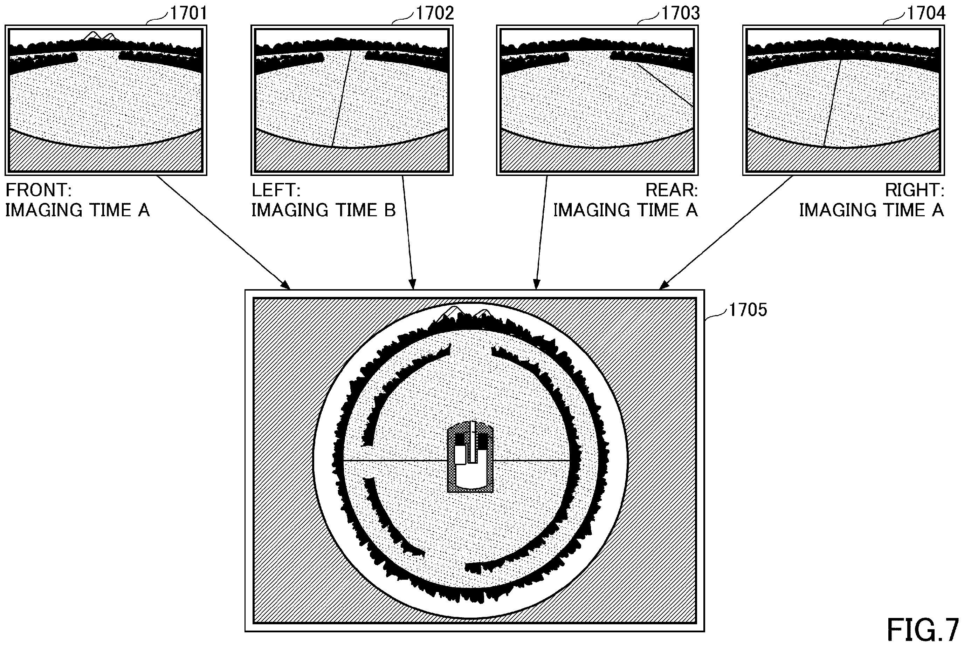

FIG. 7 is a diagram illustrating a concept of generating the overhead view image data by combining the captured image data by the combining unit 3102 according to the present embodiment. In the example illustrated in FIG. 7, the combining unit 3102 extracts captured image data 1701 to 1704 in which no obstacle is displayed in each of the four directions centered on the position where the shovel 100 is present, among the captured image data captured by the imaging device 40, and combines the extracted captured image data 1701 to 1704 to generate overhead view image data 1705. Among the captured image data 1701 to 1704 illustrated in FIG. 7, for example, the captured image data 1701, 1703, and 1704 are captured images captured at a time A, and the captured image data 1702 is captured image captured at a time B. That is, although an obstacle is present on the left side of the shovel 100 at the time A, no obstacle is present on the left side of the shovel 100 at the time B, and the captured image data 1702 captured at the time B is thus used instead when the overhead view image data 1705 is generated.

Returning to FIG. 4, the storage unit 3103 stores the overhead view image data generated by the combining unit 3102 in the combined image storage unit 350 in association with various information included in the transmission data 5005, for example, position coordinates (latitude and longitude), a direction in which the shovel 100 faces, date and time information (including time), and information indicating a work process for each work site. Thus, every time the transmission data 5005 is transmitted, the overhead view image data as a combined result is stored in the combined image storage unit 350.

An example in which the storage unit 3103 according to the present embodiment saves the overhead view image data in the combined image storage unit 350 in association with various kinds of information will be described. The present embodiment is not limited to the method of storing the overhead view image data after the four pieces of captured image data are combined, and the four pieces of captured image data included in the transmission data 5005 may be stored as they are. In this case, at the stage of reading the stored captured image data, the combining unit 3102 may combine the read captured image data to generate the overhead view image data, or the communication terminal 400 may combine the captured image data to generate the overhead view image.

The storage unit 3103 according to the present embodiment can store the overhead view image data and various kinds of information in association with each other for each position where the shovel 100 or the like is moving while the shovel 100 is operating. In the example illustrated in FIG. 6, the overhead view image data and various kinds of information are stored in association with each other for each position indicated by a circle mark "○" and each position indicated by a square mark "◇". The various kinds of information to be stored are the same as the various kinds of information stored as the transmission data 5005 described above, and thus the description thereof will be omitted.

The storage unit 3103 stores the above-described information in the combined image storage unit 350 for each work site. At this time, the storage unit 3103 also saves information indicating the position (e.g., the address and the latitude and longitude) and the name of the work site in the combined image storage unit 350. Thus, the user can select a desired work site to be displayed.

The display image generation unit 3104 generates display image data to be displayed on the communication terminal 400 from the overhead view image data stored in the combined image storage unit 350. The generated display image data is image data displayed as if the work site were viewed from the viewpoint of the shovel 100, a person, or the like.

The display image generation unit 3104 according to the present embodiment generates virtual three dimensional space data indicating the work site by projecting the overhead view image data onto a virtual three dimensional space model. The three dimensional space model may be, for example, a cylindrical shape. By projecting the overhead view image data on the side surface and the bottom surface of the cylindrical shape, a virtual three dimensional space around the shovel 100 can be implemented. Then, the display image generation unit 3104 re-projects the image onto a two dimensional virtual plane with the position where the shovel 100 is present as a viewpoint and a predetermined direction as a line of sight (direction viewed by the eyes) in the virtual three dimensional space indicated by the three dimensional space data. Thus, the display image data can be generated which is displayed as if the work site were viewed from the position where the shovel 100 is present.

Further, when there is information indicating the inclination of the shovel 100 associated with the overhead view image data, the display image generation unit 3104 according to the present embodiment may generate display image data as if the work site were viewed from any given viewpoint after projection onto the virtual three dimensional model in consideration of the inclination of the shovel 100. This enables the user referring to the display image to recognize the situation including the inclination of the work site. In the present embodiment, an example in which the overhead view image data is used to generate the display image data has been described. However, the present embodiment is not limited to the method of using the overhead view image data for generating the display image data, and for example, the display image data may be generated from the captured image data, or the captured image data may be used as the display image data.

The transmission processing unit 3105 controls transmission of information to the communication terminal 400 or the shovel 100 using the communication device 320.

Specifically, the transmission processing unit 3105 transmits the display image data (an example of the combined image) generated by the display image generation unit 3104 to the communication terminal 400. For example, when the receiving processing unit 3101 receives a transmission request for display image data from the communication terminal 400 together with designation of at least one of the direction, the time span or time, or the position, the transmission processing unit 3105 transmits display image data generated based on at least one of the designated direction, time span or time, and position to the communication terminal 400, in response to the designated one of direction, time span or time, and position. In the present embodiment, a case where the display image data is transmitted to the communication terminal 400 has been described as an example of control for displaying the display image data as if the work site were viewed from any given viewpoint. The control for displaying the display image data is not limited to the transmission of the display image data to the communication terminal 400, and the control for displaying the display image data may be display control of the display image data.

The management device 300 transmits the display image data, and thus the communication terminal 400 can display the display image data which is represented as if the shovel 100 can view in a predetermined direction from the position at which the shovel 100 performs imaging. Compared to the overhead image data, the displayed image data represents the situation of the shovel 100 at an angle of view closer to the human viewing angle, although the angle of view displayed is narrower. Since such display image data can be displayed, the user of the communication terminal 400 can grasp a surrounding situation of the shovel 100 without a sense of discomfort.

In the present embodiment, the data (an example of information based on the combined image data) transmitted by the transmission processing unit 3105 is not limited to the display image data obtained by viewing the work site from any given viewpoint, and may be overhead view image data, four pieces of captured image data, or the like. Thus, the user of the communication terminal 400 can visually recognize the work site in a desired mode, and can thus easily grasp the situation at the work site. In addition, when receiving the overhead image data, the communication terminal 400 may generate display image data as if the work site were viewed from any given viewpoint from the overhead image data and display the display image data, or may display the overhead image data as it is.

### <Specific Example of Overhead View Image Data>

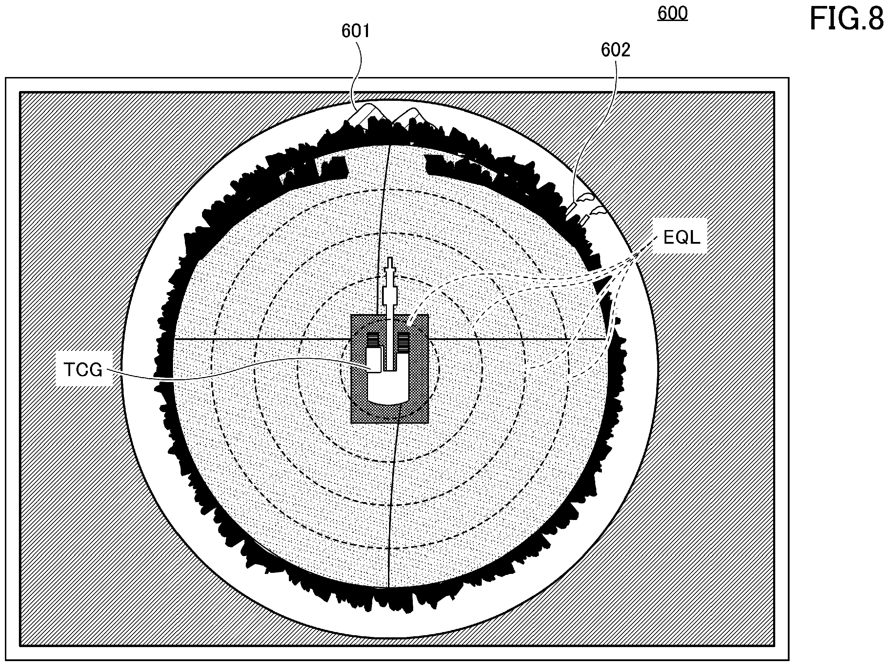

FIG. 8 is a diagram illustrating an example of the overhead view image data generated by the combining unit 3102 of the management device 300 according to the present embodiment. The overhead view image data illustrated in FIG. 8 is an image generated based on the four imaging devices 40 provided in the shovel 100, and represents the surroundings of the shovel 100 from a viewpoint separated upward from the shovel 100 by a predetermined distance. As illustrated in FIG. 8, the overhead view image data represents the surrounding situation of 360 degrees around the shovel 100.

As illustrated in FIG. 8, the overhead view image data illustrates equidistant lines EQL around the icon TCG representing the shovel 100. In addition, the overhead view image data includes not only an object existing near the shovel 100 but also an object (e.g., a mountain 601 or a chimney 602) existing far in the horizontal direction when viewed from the shovel 100.

As described above, the overhead view image data is projected onto the virtual three dimensional space model, and thus the display image data representing the surroundings of the shovel 100 from any given viewpoint existing in the three dimensional space can be generated. That is, in the present embodiment, as described above, a screen of the work site viewed from any given viewpoint can be generated and displayed using the overhead view image data. In the present embodiment, the image data used for displaying the screen of the work site viewed from any given viewpoint is not limited to the overhead view image data, and image data obtained by capturing the work site from any given viewpoint in advance may be used, or other types of image data may be used.

### <Control System of Communication Terminal>

Next, a control system of the communication terminal 400 illustrated in FIG. 4 will be described. The communication terminal 400 includes a control device 410, a communication device 420, a display device 430, and an input device 440.

The communication device 420 is any given device that communicates with an external device such as the management device 300 through the communication network NW. The communication device 420 is, for example, a mobile communication module corresponding to a mobile communication standard such as LTE, 4G, or 5G.

The display device 430 displays various information images. The display device 430 is, for example, a liquid crystal display or an organic EL display.

The input device 440 is an example of an operation unit that receives various operations in the communication terminal 400 from the user. The input device 440 includes an operation unit implemented by hardware such as a button and a touch panel mounted on the display device 430. The input device 440 may be a combination of an operation unit by hardware such as a touch panel mounted on the display device 430 and an operation unit by software such as a button icon on an operation screen displayed on the display device 430.

The control device 410 controls various operations of the communication terminal 400. The control device 410 implements an image display processing unit 4101, an input processing unit 4102, a transmission processing unit 4103, and a receiving processing unit 4104 as functional units implemented by executing one or more programs installed in, for example, a non-volatile auxiliary storage device.

The functions of the image display processing unit 4101, the input processing unit 4102, the transmission processing unit 4103, the receiving processing unit 4104, and the like may be enabled by a predetermined application program (hereinafter, referred to as an "on-site display application") installed in the control device 410 being activated in response to a predetermined operation performed on the input device 440 by the user.

The on-site display application is an application used to display display image data representing the situation at the work site from any given viewpoint based on the captured image data captured by the imaging device 40 of the shovel 100. In the present embodiment, when the on-site display application is activated, a list screen of work sites is displayed.

The image display processing unit 4101 performs processing for displaying a screen relating to the on-site display application on the display device 430. For example, the image display processing unit 4101 displays a list screen of the work sites. The user can select a work site to be displayed and designate a position to be displayed in the work site from the work site list screen.

The input processing unit 4102 performs input processing corresponding to various operations of the user on the screen relating to the on-site display application via the input device 440. For example, the input processing unit 4102 performs input processing of the selected work site and the designated position. The information to be input by the input processing unit 4102 is not limited to the combination of the selected work site and the designated position. The information to be input may be only the work site, or may be at least one of the position, the time, and the direction when the work site is specified.

The transmission processing unit 4103 performs processing for transmitting information to the management device 300 using the communication device 420.

For example, when the input processing unit 4102 performs input processing of the selected work site and the designated position, the transmission processing unit 4103 transmits a transmission request for information relating to the work site and the designated position to the management device 300. In this way, the transmission processing unit 4103 transmits a transmission request (e.g., at least one of the position, the time, and the direction) according to the information subjected to the input processing by the input processing unit 4102 to the management device 300.

The receiving processing unit 4104 performs receiving processing of information from the management device 300, using the communication device 420.

For example, in response to a transmission request from the transmission processing unit 4103, the receiving processing unit 4104 performs receiving processing on display image data representing the situation at the work site as viewed from the designated position in the work site.

The image display processing unit 4101 displays the display image data received by the receiving processing unit 4104. In the present embodiment, an example in which the communication terminal 400 (an example of an information processing device) displays display image data representing the situation at the work site viewed from the designated position will be described. However, there are no restrictions on the image data to be displayed, and overhead image data may be displayed, or captured image data itself may be displayed. That is, the display may be any display relating to the captured image data captured by the shovel 100.

Even after the display image data representing the work site viewed from the designated position is displayed, when the input processing unit 4102 receives designation regarding the work site (the position of the imaged shovel 100, the direction to be displayed, and the time span), the transmission processing unit 4103 transmits the designation and the transmission request to the management device 300.

The receiving processing unit 4104 receives the display image data in association with at least one of the direction, the time, or the position designated by the user from the management device 300 in response to the transmission request. The image display processing unit 4101 displays the received display image data. This facilitates the user to grasp the situation at the work site in accordance with the designation by the user.

### <Work Site List Screen>

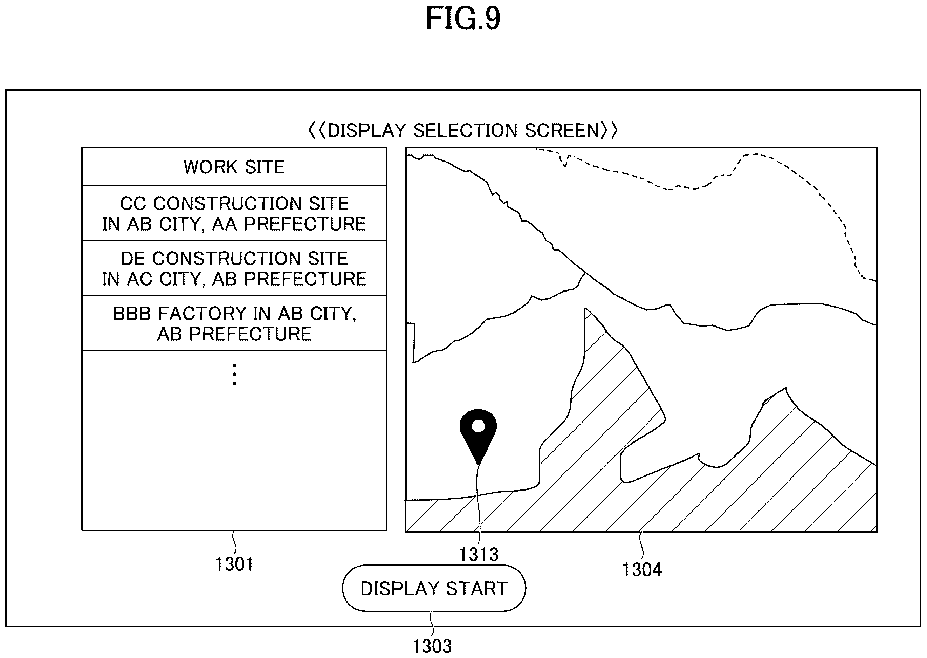

FIG. 9 is a diagram illustrating a list screen of the work sites displayed by the image display processing unit 4101 according to the present embodiment. FIG. 9 illustrates a work site field 1301, a map display field 1302, and a display start button 1303. The work site field 1301 illustrates a list of addresses and names of selectable work sites. The information on the address and the name for each work site is information received in advance from the management device 300. The user selects a work site to be displayed from the work site field 1301.

Further, map data is displayed in the map display field 1302. The map data to be displayed is not limited to the map data in the work site, and map data in a wider range (e.g., map data in Japan) may be displayed. The map data displayed in the map display field 1302 may be enlarged or reduced in accordance with an operation from the user.

The image display processing unit 4101 displays an icon (e.g., the icon 1313) indicating that the work site is present on the map data (e.g., map data in Japan) in accordance with the position (address or latitude and longitude) of the work site. The input processing unit 4102 receives selection of the icon 1313, in other words, selection of the work site. When the selection of the icon 1313 is received, the position and the name of the work site corresponding to the icon 1313 may be automatically selected in the work site field 1301.

Then, when the input processing unit 4102 receives an input of the display start button 1303, the transmission processing unit 4103 transmits a transmission request for information on the work site to the management device 300 together with information indicating the selected work site (e.g., the position and the name). When receiving the transmission request for the information on the work site, the management device 300 designates the position, the direction, and the time span in which the imaging is performed based on the initial setting in the work site, generates the display image data corresponding to the designation, and transmits the display image data to the communication terminal 400.

The communication terminal 400 receives display image data representing the work site as if the work site were viewed from any given viewpoint from the management device 300, and displays the received display image data. Thus, the user can check as if the user actually sees the situation at the work site by the display based on the captured image data captured by the shovel 100 existing in the work site only by selecting the work site.

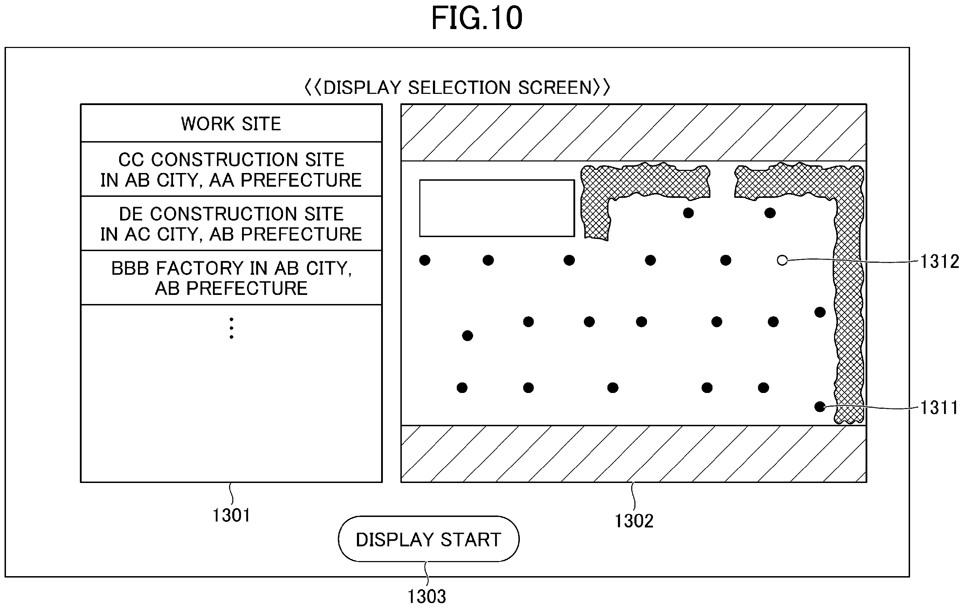

The display of the map display field 1302 is not limited to the display of the map data described above, and the map data of the work site selected in the work site field 1301 may be displayed. FIG. 10 is a diagram illustrating a list screen of the work sites displayed by the image display processing unit 4101 according to the present embodiment.

In the example illustrated in FIG. 10, the map data corresponding to the work site selected in the work site field 1301 is displayed in the map display field 1302. Black circles (e.g., reference numeral 1311) illustrated in the map display field 1302 each indicate a position at which an image is captured.

The user can designate a desired black circle to be displayed from black circles displayed in the map data displayed in the map display field 1302. The display of the designated black circle is switched to a white circle (e.g., the white circle 1312). The input processing unit 4102 receives designation of a position indicated by the white circle 1312. Further, when the input processing unit 4102 receives an input of the display start button 1303, the transmission processing unit 4103 transmits a transmission request for information on the selected work site and the designated position to the management device 300. The subsequent processing is the same, and a description thereof will thus be omitted. Thus, the communication terminal 400 can display the display image data corresponding to the position designated by the user. Then, the user can recognize the surrounding situation of the designated position.

Note that, in the present embodiment, an example of the list screen of the work sites is illustrated, and the settings relating to the work site to be displayed may be designated by another method. A field for performing the designation may be added to the list screen of the work sites. For example, a field capable of receiving an input of date and time or a field capable of receiving a direction may be displayed on the list screen.

For example, the user may designate a desired time span (including date and time) to be displayed. When the input processing unit 4102 receives an input of the display start button after receiving the designation of the time span, the transmission processing unit 4103 transmits a transmission request for information on the selected work site and the designated time span to the management device 300. This enables the user to recognize the display image data captured in the designated time span at the work site. The present embodiment illustrates an example of a screen for selecting a work site, and other modes may be adopted. For example, the communication terminal 400 may display a text box on the search screen, display a list of work sites matching the character string input in the text box, and receive a selection of a work site from the list.

### <Display Screen of Display Image Data>

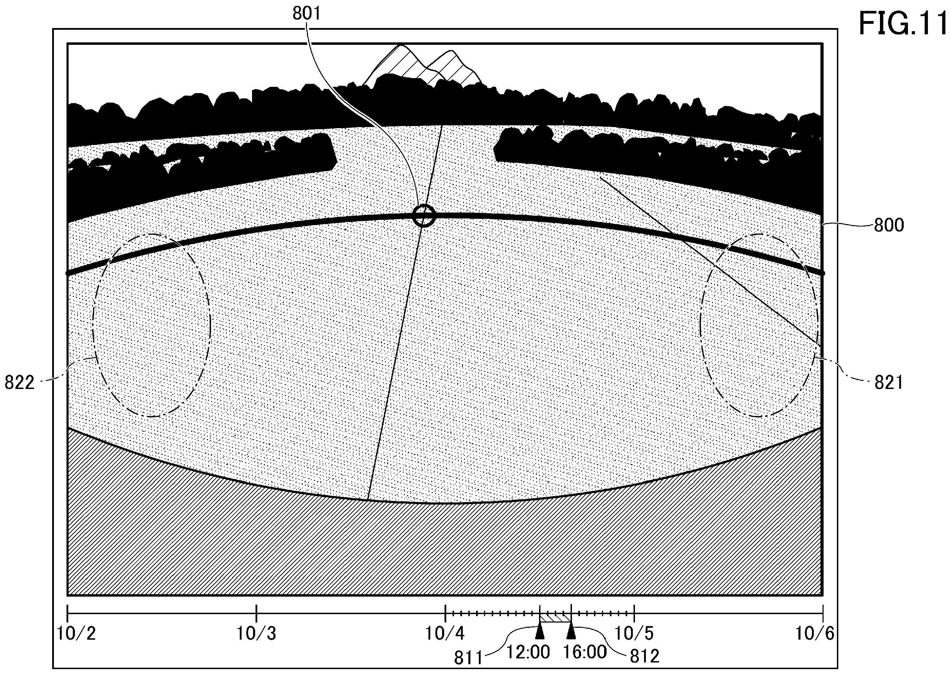

FIG. 11 is a diagram illustrating a display screen displayed by the image display processing unit 4101. In the display screen illustrated in FIG. 11, display image data 800 representing the work site as if the work site were viewed from any given viewpoint is displayed, and a bar (an example of operation information) for setting a desired time span to be displayed is displayed below the display image data 800.

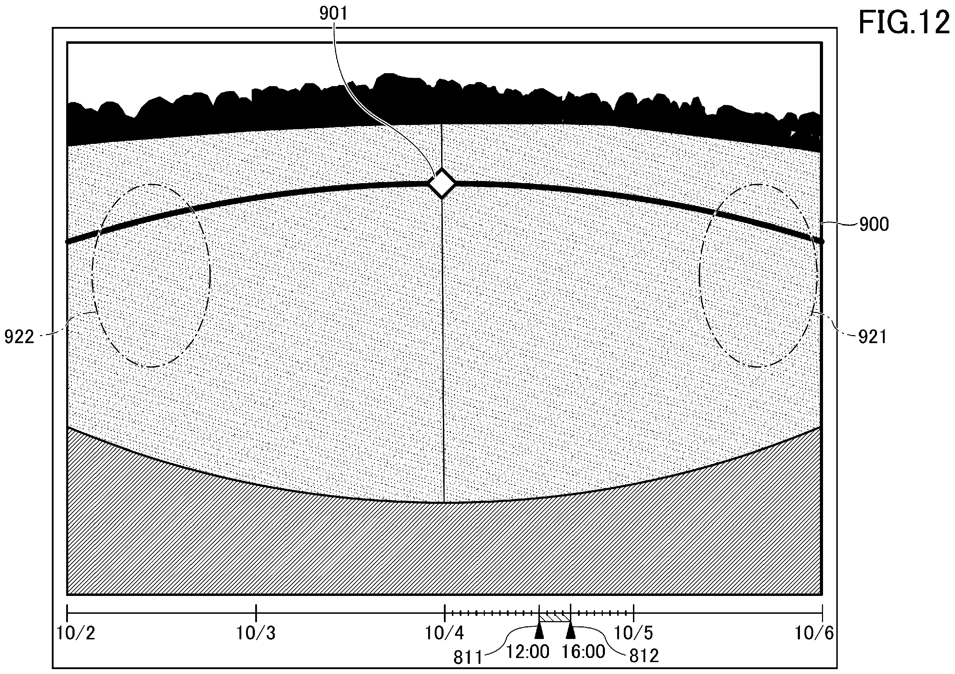

In the example illustrated in FIG. 11, 12: 00 on October 4^{th} ("10/4") is set as a start point 811 of the bar, and 16:00 on October 4^{th} is set as an end point 812 of the bar. Therefore, the display image data based on the captured image data captured within the time span (12:00 on 10/4 to 16:00 on 10/4) is displayed.

In the present embodiment, the setting of the time span is not limited to the operation on the bar. For example, the time span may be input by characters. Furthermore, a specific date, time, or the like, for example, "4 days ago (for 1 day) ", "7 days ago (for 1 day) ", "13:30 on the 12^{th}", "latest", or the like may be received.

In this way, the user can switch the desired time span (including the time) at the work site to be displayed by an operation. When the input processing unit 4102 receives a change in the time span, the transmission processing unit 4103 transmits a transmission request for display image data captured at the same position within the changed time span to the management device 300. Thus, the receiving processing unit 4104 receives the display image data corresponding to the changed time span at the same position. This enables the image display processing unit 4101 to display the display image data indicating the situation during the designated time span.

In this way, the desired time to be displayed can be switched in accordance with the user's operation, and thus the user can recognize the situation at the work site during the designated time span. For example, the user can easily check the situation at the work site at night, the situation at the work site at sunset, the situation at the work site during the daytime, or the like. The user can perform various operations on the display screen illustrated in FIG. 11. For example, the user can switch the viewing direction. Any given method may be used as a method of switching the viewing direction, and the following methods are considered, for example.

In the display image data illustrated in FIG. 11, the input processing unit 4102 receives pressing of an area 822 or an area 821. Thereafter, the transmission processing unit 4103 transmits a transmission request for display image data at the same position and in a direction (left or right) corresponding to the pressed one of the area 822 or the area 821 to the management device 300. Thus, the receiving processing unit 4104 receives the display image data corresponding to the pressed direction at the same position. Thus, the image display processing unit 4101 displays the display image data whose direction is switched by 90 degrees. The switching of the orientation may be performed at angular intervals other than 90 degrees, such as 30 degrees or 45 degrees. In this way, the direction to be displayed can be switched in accordance with the user's operation, and thus the situation at the work site can be easily checked.

Further, on the display screen illustrated in FIG. 11, the user can switch the viewpoint to be displayed as if the user moves in the virtual space.

Specifically, an icon 801 (an example of display information) for switching the viewpoint to another position is displayed on the display image data illustrated in FIG. 11. The icon 801 displayed in the display image data corresponds to a position at which the shovel 100 has performed imaging. In the present embodiment, when the display image generation unit 3104 generates the display image data, an icon is added to the position at which the shovel 100 has performed imaging.

For example, when the display image illustrated in FIG. 11 illustrates the situation at the work site from position coordinates 710G illustrated in FIG. 6, the icon 801 illustrating the circle mark "○" is displayed at the position coordinates 710F or the position corresponding to the position coordinates 710H.

Therefore, when the input processing unit 4102 performs input processing of pressing the icon 801, the transmission processing unit 4103 transmits a request for display image data of the work site as viewed from the position indicated by the icon 801 to the management device 300. Thus, the communication terminal 400 can receive and display a display image data (as if the work site were viewed from the position) based on captured image data captured at the position corresponding to the icon 801.

That is, in the display image according to the present embodiment, the icon that can be pressed is displayed so as to correspond to the position where the first shovel 100A has been present. Then, when the user presses the icon, the image display processing unit 4101 switches the display to the display image data corresponding to the position where the imaging is performed. In other words, the user can implement the switching of the display of the display image in accordance with the movement path of the first shovel 100A by pressing the icon assigned to the display image. As described above, the surrounding image management system SYS according to the present embodiment can implement image display (walk-through) in which the viewpoint changes as if the user is moving in the image. Thus, the surrounding image management system SYS according to the present embodiment can improve operability. The conditions for displaying the icon include a condition in which the image is captured at the position indicated by the icon, and a condition in which the time at which the image is captured is included in the time span set by the user. For example, when one week is set as the time span, an icon indicating a position at which the image is captured in the one week is displayed. This enables display switching between pieces of the display image data captured within a time span designated by the user.

In the present embodiment, the icon for changing the viewpoint displayed on the display image data is not limited to the form indicating the movable position such as "○". For example, the icon may be an icon or the like indicating a movable direction in the form of an arrow or the like. Furthermore, in the present embodiment, the method is not limited to the method of displaying icons for switching the viewpoint in the virtual space, and another method (e.g., guidance of a movable position by characters, or the like) may be used.

In the present embodiment, the icon for changing the viewpoint is not limited to the icon displayed in accordance with the movement path of the shovel 100. In the display image data illustrated in FIG. 11 and the like, an icon for changing the viewpoint may be displayed at a position where the management device 300 holds the overhead view image data.

For example, when the communication terminal 400 according to the present embodiment displays the display image data relating to the position at which the first shovel 100A performs imaging, and when a position at which the second shovel 100B performs imaging is present in the vicinity of the position, the communication terminal 400 can switch the display image data to the display image data relating to the position at which the second shovel 100B performs imaging.

FIG. 12 is a diagram illustrating a display screen displayed by the image display processing unit 4101. Although a bar for setting a time span (an example of information relating to time) is displayed on the display screen illustrated in FIG. 12 as in FIG. 11, description thereof will be omitted.

In FIG. 12, when an area 922 or an area 921 is pressed, the display image data whose direction is switched by 90 degrees is displayed. The specific processing is the same as the method illustrated in FIG. 11, and thus the description thereof will be omitted.

In the present embodiment, an icon 901 for switching the viewpoint to another position is displayed on display image data 900 displayed on the display screen. The icon 901 is added to the display image data 900 when the display image generation unit 3104 of the management device 300 generates the display image data 900.

In the present embodiment, the icon "○" indicating the position at which the first shovel 100A has performed imaging and the icon "O" indicating the position at which the second shovel 100B has performed imaging are displayed separately. In this way, the icon displayed on the screen has a different display mode according to the shovel 100 captured from the position indicated by the icon. Thus, the icons displayed on the screen are displayed in different modes according to the shovel 100 that performs imaging from the positions indicated by the respective icons.

For example, the display image illustrated in FIG. 12 illustrates the surrounding situation from the position coordinates 710G (captured by the first shovel 100A) illustrated in FIG. 6. In the display image data 900, an icon 901 (an example of display information) indicating a square mark "O" is given to a position corresponding to the position coordinates 720B at which the second shovel 100B performs imaging.

Therefore, when the input processing unit 4102 performs input processing of pressing the icon 901, the transmission processing unit 4103 transmits a request for display image data as if the work site were viewed from the position indicated by said icon 901 to the management device 300. Thus, the communication terminal 400 can receive and display the display image data with the position corresponding to the icon 901 as the viewpoint. As described above, in the present embodiment, when the work site is imaged by the plurality of shovels 100, the communication terminal 400 can switch the display not only according to the movement path of each shovel 100 but also between the different shovels 100 when displaying the display image data.

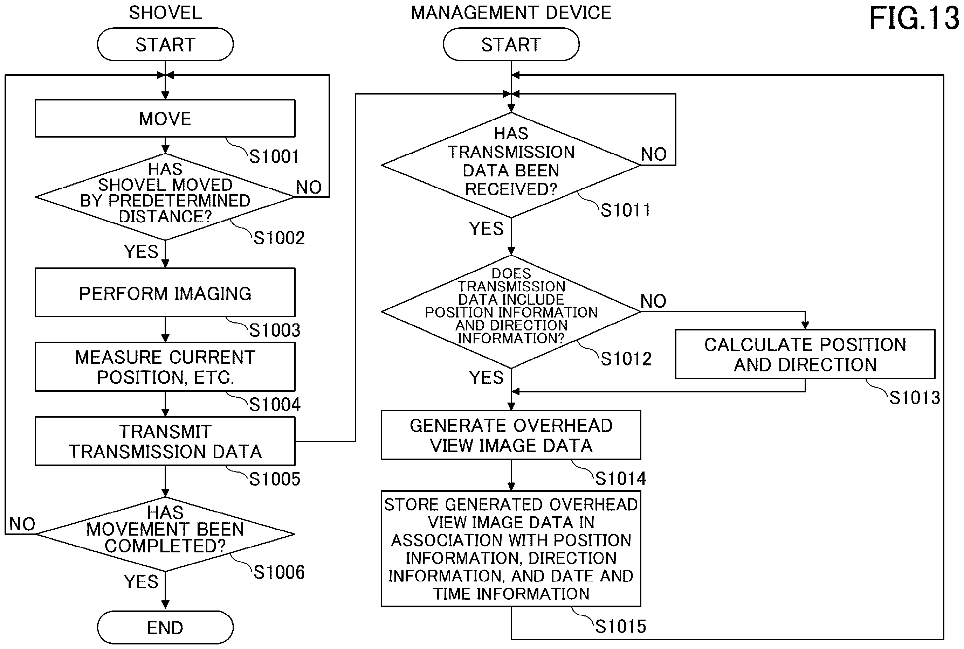

FIG. 13 is a sequence diagram illustrating a processing procedure until the combined image data is stored in the surrounding image management system SYS according to the present embodiment.

First, the shovel 100 moves at the work site (S1001). Then, the controller 30 of the shovel 100 determines whether or not the shovel 100 has moved by a predetermined distance from the input of the various sensors (S1002). When the controller 30 determines that the shovel 100 has not moved by the predetermined distance (S1002: No), the controller 30 performs the processing again from S1001.

Meanwhile, when the controller 30 determines that the shovel 100 has moved by the predetermined distance (S1002: Yes), the imaging device 40 performs imaging, and then the image acquisition unit 3001 acquires the captured image captured by the imaging device 40 (S1003).

Further, the GPS unit 46 measures the current position and direction, and then outputs the current position and direction to the controller 30 (S1004).

The transmission processing unit 3003 then transmits the transmission data 5005 including the current position information, the direction information, and the date and time information of the imaging as various information to the management device 300 (S1005). The position information and the direction information may not be included in the various kinds of information when a failure or the like occurs in the measurement.

Thereafter, the controller 30 of the shovel 100 determines whether or not the movement has been completed (S1006). When the movement has not been completed (S1006: No), the processing is performed again from S1001.

Meanwhile, when the controller 30 of the shovel 100 determines that the movement has been completed (S1006: Yes), the controller 30 of the shovel 100 ends the processing.

Then, the receiving processing unit 3101 of the management device 300 determines whether or not the transmission data 5005 including the captured image data and the like has been received from the shovel 100 (S1011). When the transmission data 5005 has not been received (S1011: No), the processing is repeated until the transmission data is received.

When the receiving processing unit 3101 receives the transmission data 5005 including the captured image data and the like from the shovel 100 (S1011: Yes), the combining unit 3102 determines whether or not the transmission data 5005 includes the position information and the direction information (S1012). When the combining unit 3102 determines that the transmission data 5005 includes the position information and the direction information (S1012: Yes), the processing proceeds to S1014.

Meanwhile, when the combining unit 3102 determines that the transmission data 5005 does not include at least one of the position information and the direction information (S1012: No), the combining unit 3102 calculates the position and the direction at which the captured image data is captured based on the captured image data included in the transmission data 5005 (S1013). For example, the combining unit 3102 calculates the position and direction at which the imaging device 40 has performed imaging when the captured image data has been captured, based on the amount by the position of the feature information (e.g., the mountain 601 or the chimney 602) indicating the object existing at a long distance from the shovel 100 is shifted between the captured image data whose position and direction have been already identified and the current captured image data. Further, the combining unit 3102 may calculate the position and the direction based on the amount of movement and the amount of turning included in the various kinds of information.

The combining unit 3102 combines the four captured images to generate the overhead view image data (S1014).

The storage unit 3103 stores the generated overhead view image data in the combined image storage unit 350 in association with the position information (e.g., latitudes and longitudes), the direction information (the direction in which the shovel 100 is facing), and the date and time information (including the time) (S1015). When the transmission data 5005 includes information on the work process or the like, the information on the work process or the like is also stored in the combined image storage unit 350. After the storage, the management device 300 performs processing again from S1011.

The overhead view image data and various kinds of information are associated with each other by the above-described processing procedure and stored in the combined image storage unit 350. Thus, the work site can be displayed on the communication terminal 400.

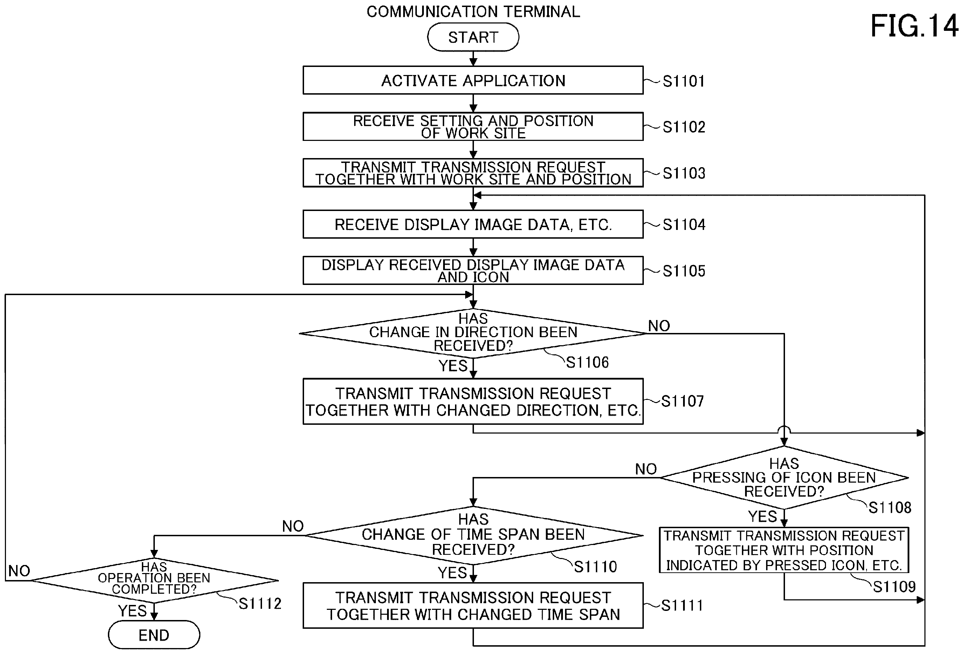

Next, a procedure until the communication terminal 400 displays the display image data indicating the work site will be described. FIG. 14 is a flowchart illustrating a processing procedure in the case of displaying display image data illustrating the work site in the communication terminal 400 according to the present embodiment.

First, in the communication terminal 400, the on-site display application is activated (S1101). Thus, a screen representing a list of work sites (herein after referred to as "list screen of work sites") (see FIG. 9) is displayed.

The input processing unit 4102 of the on-site display application receives the settings of the work site and the position of the work site from the list screen of the work site (S1102). Note that the setting of the position of the work site is optionally received.

The transmission processing unit 4103 transmits a display image data transmission request to the management device 300 together with the designated work site and the position of the work site (S1103). When the setting of the position of the work site is not received, only the information for identifying the work site is transmitted together with the transmission request.

The receiving processing unit 4104 receives, from the management device 300, a display image data or the like of the work site as if the work site were viewed from the transmitted position (S1104). An icon (an example of display information) indicating a position at which imaging is performed is added to the display image data received by the receiving processing unit 4104. The received display image satisfies the condition transmitted together with the transmission request in S1103. The direction of the line of sight of the received display image data and the time span during which the imaging has been performed are preset as the initial settings.

The image display processing unit 4101 displays the received display image data and the icon assigned to the display image (S1105).

The input processing unit 4102 determines whether or not a change in direction has been received by pressing a predetermined area in the display image (S1106). When the change in the direction is received (S1106: Yes), the transmission processing unit 4103 transmits the display image data transmission request to the management device 300 together with the changed direction, the same position as the position currently displayed, and the time span (an example of information on time) currently set in the bar (S1107). Thereafter, the display image satisfying the transmitted condition is received in S1104.

Meanwhile, when the input processing unit 4102 does not receive the change in the direction (S1106: No), the input processing unit 4102 determines whether or not the input processing unit 4102 has received the pressing of the icon (S1108) . When the pressing of the icon has been received (S1108: Yes), the transmission processing unit 4103 transmits the display image data transmission request to the management device 300 together with the position indicated by the pressed icon, the same direction as the direction currently displayed, and the time span set in the bar (S1109) . The position indicated by the icon is an actual position of the work site indicated by the icon, and is, for example, a position indicated by latitude and longitude. The information on the position is stored in advance as, for example, attribute information of the display image data. Thereafter, the display image satisfying the transmitted condition is received in S1104.

Meanwhile, when the input processing unit 4102 does not receive the pressing of the icon (S1108: No), the input processing unit 4102 determines whether or not a change of the time span has been received (S1110). When the change of the time span has been received (S1110: Yes), the transmission processing unit 4103 transmits a display image data transmission request to the management device 300 together with the changed time span, the same position as the currently displayed position, and the same direction as the currently displayed direction (51111). Thereafter, the display image satisfying the transmitted condition is received in S1104.

Meanwhile, when the input processing unit 4102 does not receive the change of the time span (S1110: No), the control device 410 determines whether or not the operation has been completed (S1112). When the operation has not been completed (S1111: No), the processing is performed again from S1106.

Meanwhile, when the control device 410 determines that the operation has been completed (S1112: Yes), the control device 410 ends the processing.

The communication terminal 400 according to the present embodiment can display the display image data in response to the user's request by the above-described processing procedure.

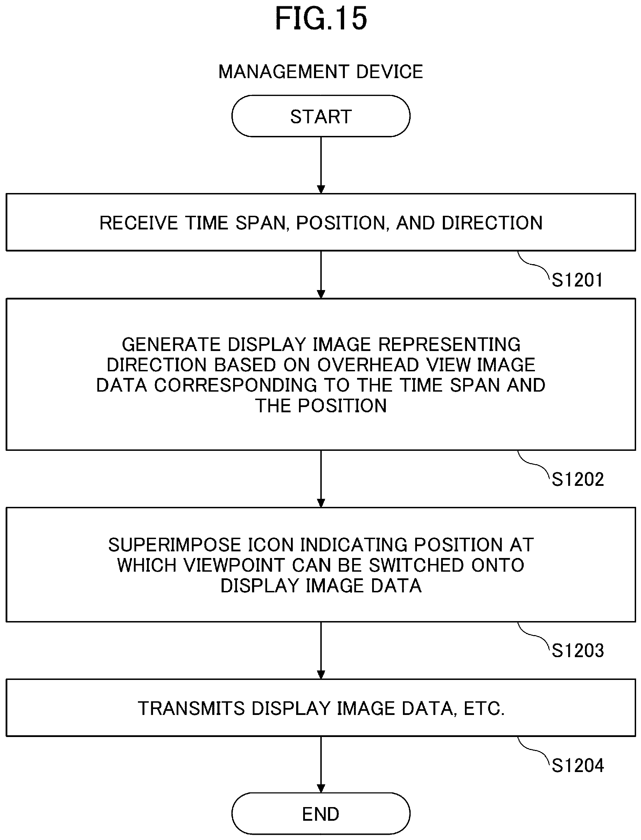

Next, a procedure until the management device 300 transmits the display image data to the communication terminal 400 will be described. FIG. 15 is a flowchart illustrating a processing procedure until display image data is transmitted in the management device 300 according to the present embodiment.

First, the receiving processing unit 3101 receives a display image data transmission request together with at least one of the position, direction, and time span (an example of information relating to time) indicating the work site to be displayed from the communication terminal 400 (S1201). The receiving processing unit 3101 may not receive all of the position, the direction, and the time span together with the transmission request. For example, the receiving processing unit 3101 may receive only information for identifying the work site from the communication terminal 400. The information that has not been received (e.g., the position, time span, and direction at which the image has been captured) is determined according to the initial settings.

The display image generation unit 3104 specifies the overhead view image data corresponding to the time span and the position, reads the overhead view image data from the combined image storage unit 350, and generates the display image (an example of information based on the composite image) representing the work site as viewed from the position in the direction (S1202). When there are a plurality of pieces of overhead view image data included in the time span, the latest piece of the overhead view image data is read.

The display image generation unit 3104 then assigns (superimposes) an icon to (on) the generated display image at the position coordinates corresponding to the position (the position at which the viewpoint can be switched) at which the overhead view image data is stored in the combined image storage unit 350 (S1203).

The transmission processing unit 3105 transmits the display image data (an example of information based on the composite image) to the communication terminal 400 (S1204). In addition, in a case where an icon is assigned (superimposed) to the display image data to be transmitted, the display image data includes information on the position of the work site corresponding to the position indicated by the icon as the attribute data.

The management device 300 according to the present embodiment can transmit display image data in response to a request from the communication terminal 400 by the above-described processing procedure.

### (Modification 1)

In the above-described embodiment, a method in which the image display processing unit 4101 of the communication terminal 400 displays the display image data representing the work site as if the work site were viewed from any given viewpoint has been specifically described. However, the display data displayed by the communication terminal 400 is not limited to the display image data representing the work site as viewed from any given viewpoint, and for example, map data of the work site may be displayed. In a Modification 1, an example of displaying map data of a work site will be described.

Specifically, the management device 300 generates the map data when the management device 300 receives a display request for the map data of the work site from the communication terminal 400.

Specifically, the combining unit 3102 generates the overhead view image data by combining pieces of the captured image data captured by the shovel 100 at the same position and in different directions, and subsequently cuts out a predetermined area from the overhead view image data generated for each of the positions included in the work site, and connects cut out portions of the overhead view image data to generate a work site overhead view image data representing the work site in an overhead view manner. In the present embodiment, the combining unit 3102 generates the overhead view image data of the entire work site using the overhead view image data generated based on the captured image data captured within a predetermined time span. The overhead view image data of the entire work site is image data representing an area in the work site in an overhead view manner like an aerial photograph.

In the present modification, the shovel 100 generates the overhead view image data of the entire work site based on the captured image data captured during the movement due to the work.

That is, the overhead view image data representing the situation in the work site where the shovel 100 has performed the work can be generated without disturbing the work of the shovel 100. The storage unit 3103 may save the generated overhead view image data of the entire work site in the combined image storage unit 350.

Then, the management device 300 transmits the overhead view image data of the entire work site generated by the combining unit 3102 to the communication terminal 400. Accordingly, a screen representing the work site in an overhead view can be displayed on the communication terminal 400 (e.g., overhead view image data of the entire work site can be displayed) . The user can easily check the state of the entire area where the shovel 100 has worked by referring to the screen.

When the management device 300 receives a request for enlargement or reduction of the overhead view image data of the entire work site from the communication terminal 400, the combining unit 3102 generates enlarged or reduced overhead view image data of the entire work site based on the overhead view image data of the entire work site stored in the combined image storage unit 350. Then, the transmission processing unit 3105 transmits the generated overhead view image data of the entire work site to the communication terminal 400, and thus display according to a request of the user can be implemented.

### (Modification 2)

In the Modification 1, an example in which the generated overhead view image data of the entire work site is displayed has been described. However, the present invention is not limited to the display mode in which only the generated overhead image data of the entire work site is displayed, and the overhead image data of the entire work site may be displayed in a superimposed manner on a corresponding area of the actual map data. In the map data, position coordinates (e.g., latitude and longitude) corresponding to each point are embedded. The map data may be, for example, data indicating situations of roads, sites, and the like in Japan as images, or may be an aerial photograph illustrating Japan in an overhead view manner.

For example, when displaying the list screen of the work sites, the receiving processing unit 4104 of the communication terminal 400 receives the overhead view image data of the entire predetermined work site from the management device 300 and acquires the map data including the surroundings of the work site. The map data is acquired from, for example, a map providing service or the management device 300. Furthermore, the method of acquiring the map data is not restricted, and the map data may be stored in advance in the storage unit of the communication terminal 400.

Then, the image display processing unit 4101 of the communication terminal 400 performs processing of displaying the overhead view image data of the entire work site in a superimposed manner on a corresponding area of the map data on the basis of the acquired position coordinates of the overhead view image data of the entire work site and the position coordinates embedded in the map data. The process of superimposing the overhead view image data of the entire work site on the corresponding area of the map data is not limited to the example performed by the communication terminal 400, and may be performed by the management device 300.

Thus, the user can check both the specific situation inside the work site and the surrounding situation of the work site.

### (Modification 3)

As in the embodiment described above, the various kinds of information of the transmission data 5005 may include at least one of the position coordinates, the orientation of the shovel 100, and the date and time information (including the time). In a Modification 3, an example in which one of the position coordinates, the orientation of the shovel 100, and date and time information (including time) is included as various kinds of data of the transmission data 5005 will be described. For example, when only the position coordinates are included as the various information of the transmission data 5005, the management device 300 according to the modification manages the four pieces of captured image data in association with the position coordinates. Accordingly, when the designation of the position coordinates is received from the communication terminal 400, the four pieces of captured image data associated with the position coordinates may be transmitted to the communication terminal 400.

Further, the management device 300 may manage each of the four pieces of captured image data in association with information indicating which imaging device 40 has captured the image. In this case, when the designation of the position coordinates is received from the communication terminal 400, the display data representing the screen on which the four pieces of captured image data associated with the position coordinates are arranged in consideration of the imaging device 40 that has performed the imaging may be transmitted to the communication terminal 400, or the overhead view image data obtained by combining the four pieces of captured image data may be transmitted. Thus, the communication terminal 400 can check the surroundings of the position information in approximately 360 degrees. Even when the four pieces of captured image data are not associated with the directions, a user who recognizes the work site can grasp the situation at the work site when referring to the four captured images displayed on the communication terminal 400. Note that when the various information of the transmission data 5005 includes information on the direction in addition to the position coordinates, the display can be performed in consideration of the direction in which the image is captured, and thus the work site can be more easily understood.

For example, when only the direction is included as the various kinds of information of the transmission data 5005, the management device 300 according to the modification manages the four pieces of captured image data in association with the direction in which the shovel 100 faces. Alternatively, the management device 300 manages each captured image data in association with the direction in which the image was captured (the direction in the world coordinate system). Furthermore, the management device 300 may manage each of the four pieces of captured image data in association with information indicating which imaging device 40 has captured the image. The management device 300 may manage each of the four pieces of captured image data in association with the direction in which the captured image data is captured. When designation of a direction (bearing) is received from the communication terminal 400, captured image data obtained by capturing an image in the direction (bearing) may be transmitted to the communication terminal 400. The communication terminal 400 may display a list of captured images corresponding to the direction (bearing) based on the received captured image data.

For example, when only time information (time at which the image is captured) is included as various kinds of information of the transmission data 5005, the management device 300 according to the modification manages the four pieces of captured image data in association with the time at which the image is captured. Furthermore, the management device 300 may manage each of the four pieces of captured image data in association with information indicating which imaging device 40 has captured the image. When the time is received from the communication terminal 400, a list of captured image data captured at this time may be transmitted to the communication terminal 400. The communication terminal 400 may display the list of captured images corresponding to the time. Thus, the user can recognize the situation of the entire work site at the time.

### (Modification 4)

In the above-described embodiment and modifications, the management device 300 generates the display image data representing the work site as viewed from any given viewpoint. However, the above-described embodiment is not limited to the method in which the management device 300 generates the display image data representing the work site as viewed from any given viewpoint. In the Modification 4, a case where the communication terminal 400 generates the display image data will be described.

The combining unit 3102 of the management device 300 generates the overhead view image data based on the captured image data transmitted from the shovel 100. Then, the transmission processing unit 3105 of the management device 300 transmits the overhead view image data to the communication terminal 400. When transmitting the overhead view image data, the transmission processing unit 3105 also transmits information on the position coordinates for assigning the icons.

Then, the image display processing unit 4101 of the control device 410 of the communication terminal 400 projects the received overhead view image data onto a virtual three dimensional space model, and then re-projects the data onto a two dimensional virtual plane to generate display image data. The method of generating the display image data is the same as that in the above-described embodiment, and thus the description thereof will be omitted.

Then, the image display processing unit 4101 displays the generated display image data on the display device 430. At this time, an icon is added to the display image data as in the above-described embodiment.

Then, the image display processing unit 4101 displays the display image data to which the icon is added. When the input processing unit 4102 receives an operation of changing the display direction, the image display processing unit 4101 generates display image data in which the display direction is changed based on the received overhead view image data.

When the input processing unit 4102 receives an operation to display the overhead view image, the image display processing unit 4101 displays the received overhead view image data.

Further, when the input processing unit 4102 receives an operation of enlarging a part of the display image data, the image display processing unit 4101 generates display image data in which the part of the area is enlarged based on the overhead view image data and displays the generated display image data.

In the present embodiment, since the communication terminal 400 generates the display image data, it is possible to reduce the load on the network and to shorten the response time based on transmission and reception, as compared with the case where the display image data is received from the management device 300.

When the input processing unit 4102 receives an operation of changing the display position, the transmission processing unit 4103 transmits a transmission request for the overhead view image data corresponding to the position to the management device 300. Thus, the communication terminal 400 can receive the overhead view image data corresponding to the position.

### (Modification 5)

Further, in the above-described embodiment and modifications, the example in which the generation of the overhead view image data is performed by the management device 300 has been described, but the generation of the overhead view image data may also be performed by the communication terminal 400 (an example of the information processing device).

For example, the management device 300 stores the four pieces of captured image data in the storage unit in association with the various kinds of information transmitted from the shovel 100.

Then, when the management device receives a transmission request for captured image data and conditions (e.g., a position and a time span) of the captured image data to be transmitted from the communication terminal 400, the management device transmits four pieces of captured image data that match the conditions to the communication terminal 400.

Then, the image display processing unit 4101 of the communication terminal 400 generates the overhead view image data from the received four pieces of captured image data. The subsequent processing is the same as that of the Modification 1, and a description thereof will be omitted.

### <Effects>

In the surrounding image management system SYS according to the embodiment and the modifications described above, at least one of the direction, the time, or the position in the work site is designated in the communication terminal 400, and thus display (e.g., display of display image data) based on the designated condition is implemented. Accordingly, the surrounding situation of the shovel 100 at the work site may be easily grasped.

In the surrounding image management system SYS according to the embodiment and the modifications described above, by operating the display image data displayed on the communication terminal 400, it is possible to implement switching of the display image data as if the shovel 100 is moving at a position where the shovel 100 has moved. This facilitates the grasping of the situation at the work site and also facilitates the operation for grasping the situation at the work site.

In the surrounding image management system SYS according to the embodiment and the modifications described above, the situation at the work site during the time span (an example of information relating to time) designated by the user can be displayed. Thus, since the change of the situation at the work site in the time span designated by the user can be checked, the situation at the work site changing over time can be easily grasped.

In the related art, as management of progress of civil engineering work at a work site, an image is captured by an imaging device at the end of work every day with a whiteboard or the like placed at the site, and a document is created with the captured image data attached thereto.

In contrast, in the surrounding image management system SYS according to the present embodiment and the modifications, image data representing the work site in which the shovel 100 has moved is stored every elapsed time. That is, the situation of the work site over time is stored. Thus, the surrounding image management system SYS can display the situation of the work site on a set date and time, and can thus implement progress management of the work site.

The surrounding image management system according to the present invention is not limited to the above-described embodiment and modifications. Various changes, modifications, substitutions, additions, deletions, and combinations are possible within the scope of the claims. Such modifications are also included in the technical scope of the present invention.

The present application claims priority to Japanese Patent Application No. 2021-208531 filed on December 22, 2021, the entire contents of which are incorporated herein by reference.

### DESCRIPTION OF THE REFERENCE NUMERALS

- 100: shovel
- 30: controller
- 44: audio output device
- 50: display device
- 52: input device
- 60: communication device
- 3001: image acquisition unit
- 3002: display processing unit
- 3003: transmission processing unit
- 300: management device
- 310: control device
- 320: communication device
- 330: output device
- 340: input device
- 350: combined image storage unit
- 3101: receiving processing unit
- 3102: combining unit
- 3103: storage unit
- 3104: display image generation unit
- 3105: transmission processing unit
- 400: communication terminal
- 410: control device
- 420: communication device
- 430: display device
- 440: input device
- 4101: image display processing unit
- 4102: input processing unit
- 4103: transmission processing unit
- 4104: receiving processing unit

## Claims

1. An information processing system comprising:
a shovel including an imaging device; and
an information processing device,
wherein the shovel transmits data to the information processing device, the data including an image captured by the imaging device and at least one of a direction, a time, or a position in association with the image, and
wherein the information processing device performs, in response to designation of at least one of the direction, the time, or the position, control for displaying the image in association with at least a designated one of the direction, the time, or the position.

2. The information processing system according to claim 1, wherein the shovel includes a plurality of the imaging devices oriented in different imaging directions, and
wherein the shovel transmits the data to the information processing device, the data including an image captured by each of the plurality of imaging devices.

3. The information processing system according to claim 1, wherein the information processing device performs control for displaying a screen, using the image in association with the designated position, the screen representing surroundings with the designated position as a viewpoint.

4. The information processing system according to claim 1, wherein the information processing device performs control for displaying a screen using the image captured at the designated time.

5. The information processing system according to claim 1, wherein upon the designation of the direction being received after the control for displaying a first screen using the image, the information processing device performs control for displaying a second screen, the second screen representing the designated direction from the position at which the image is captured.

6. The information processing system according to claim 1, wherein the information processing device stores the data in a storage unit for each of work sites in which the shovel has performed work, the data being received from the shovel, and
wherein upon a desired work site being designated, the information processing device performs control for displaying the image captured at the designated work site.

7. The information processing system according to claim 1, wherein the information processing device combines images differing in at least one of the direction, the time, or the position included in the received data to perform control for displaying a combined image.

8. The information processing system according to claim 7, wherein the information processing device combines a plurality of the images captured by the shovel at a same position, at a same time, and in different directions at a time of capturing the images to generate an overhead view, and performs control for displaying the overhead view, the overhead view representing surroundings of the shovel.

9. The information processing system according to claim 7, wherein the information processing device combines a plurality of images captured by the shovel at a same position, at different times, and in different directions to generate an overhead view, and performs control for displaying the overhead view, the overhead view representing surroundings of the shovel.

10. The information processing system according to claim 7, wherein the information processing device combines a plurality of the images captured by the shovel at a same position and in different directions, based on the data received from the shovel working in a work site to generate a first overhead view for each of positions included in the work site, and subsequently generates a second overhead view, based on the generated first overhead views, the second overhead view representing the work site in an overhead view manner.

11. The information processing system according to claim 1, wherein the information processing device performs control for displaying display information indicating a position of a work site on map data, and
wherein upon the display information being designated, the information processing device performs control for displaying the image captured by the shovel existing in the work site, the work site being indicated by the display information.

12. The information processing system according to claim 1, wherein the information processing device performs control for displaying display information indicating a position captured by the shovel on map data, the map data representing a work site, and
wherein upon the display information being designated, the information processing device performs control for displaying the image captured by the shovel at the position indicated by the display information.

13. The information processing system according to claim 1, wherein the information processing device performs control for displaying operation information capable of setting a time span, together with displaying a first image, and
wherein upon a time span being designated by the operation information, the information processing device performs control for displaying a second image, the second image being captured from a same position at which the first image is captured and being captured in the designated time span.

14. The information processing system according to claim 1, wherein the shovel captures an image by the imaging device every time the shovel moves by a predetermined distance or every time a predetermined time has elapsed.

15. The information processing system according to claim 1, wherein the information processing device further performs control for displaying display information on a screen represented based on the image, the display information representing a position at which the shovel has performed imaging, and
wherein upon the display information being designated, the information processing device performs control for displaying the screen represented based on the image, the image being captured at the position indicated by the display information.

16. The information processing system according to claim 15, wherein the display information displayed on the screen is displayed in a different display mode according to the shovel that has performed imaging from the position indicated by the display information.

17. A program for causing a computer to execute a process, the process comprising:
receiving designation of at least one of a direction, a time, or a position at which an image is captured by an imaging device, the imaging device being provided in a shovel; and
displaying the image in association with at least a designated one of the direction, the time, or the position.

18. An information processing method executed by an information processing system, the information processing system including a shovel and an information processing device, the shovel having an imaging device, the information processing method comprising:
causing the shovel to transmit data to the information processing device, the data including an image captured by the imaging device and at least one of a direction, a time, or a position in association with the image; and
causing the information processing device to perform, in response to designation of at least one of the direction, the time, or the position, control for displaying the image in association with at least a designated one of the direction, the time, or the position.
